# EUROPEAN PATENT APPLICATION

(11) **EP 4 142 237 A1**
(43) Date of publication of application: **01.03.2023**
(21) Application number: 21817920.8
(22) Date of filing: 04.03.2021
(51) Int. Cl.: H04L 29/08, H04L 29/06

(54) **LONG CONNECTION APPARATUS AND NETWORK SYSTEM**

(30) Priority: 02.06.2020 CN 202010489873
(71) Applicant: Huawei Technologies Co., Ltd., Shenzhen, Guangdong 518129 (CN)
(72) Inventor: ZHOU, Ming, Shenzhen, Guangdong 518129 (CN); WANG, Tongbo, Shenzhen, Guangdong 518129 (CN); GUO, Yongkang, Shenzhen, Guangdong 518129 (CN)
(74) Representative: Pfenning, Meinig & Partner mbB
(86) International application number: PCT/CN2021/079029
(87) International publication number: WO 2021/244087

(57) **Abstract**

A long-lived connection apparatus and a network system are provided. The network system includes a terminal device and an access point device. A first application APP is installed on the terminal device. The terminal device is configured to: in a screen-unlocked state, send, based on first socket information, a heartbeat packet to a server associated with the first APP, where the heartbeat packet is used to maintain a long-lived connection between the terminal device and the server; and send the first socket information to a first access point device when switching from the screen-unlocked state to a screen-locked state. The first access point device is configured to: after receiving the first socket information, act as a proxy for the terminal device to send the heartbeat packet to the server based on the first socket information. The first access point device can act as the proxy for the terminal device to keep a heartbeat with the server, so that the terminal device does not need to frequently wake up a module such as a processor to send heartbeat packets. Therefore, power consumption of the terminal device is reduced and a battery life of the terminal device is prolonged.

## Description

This application claims priority to Chinese Patent Application No. 202010489873.9, filed with the China National Intellectual Property Administration on June 2, 2020 and entitled "LONG-LIVED CONNECTION APPARATUS AND NETWORK SYSTEM", which is incorporated herein by reference in its entirety.

### TECHNICAL FIELD

This application relates to the field of computer technologies, and in particular, to a long-lived connection apparatus and a network system.

### BACKGROUND

A terminal device may establish a long-lived connection to a server based on a transport layer protocol such as a transmission control protocol (transmission control protocol, TCP) or a user datagram protocol (user datagram protocol, UDP). Because the long-lived connection is not released after the terminal device completes one data transmission with the server, subsequent data transmissions may be performed through the long-lived connection. Therefore, the long-lived connection can be widely applied in an instant messaging scenario and a game scenario.

The terminal device may maintain the long-lived connection to the server according to a heartbeat mechanism. Generally, the terminal device may preset a period for sending a heartbeat packet to the server. After the terminal device establishes the long-lived connection to the server, the terminal device may periodically send the heartbeat packet to the server according to a set period, to notify the server of existence of the terminal device. If the server receives the heartbeat packet sent by the terminal device, the server may determine that the terminal device is in an online state, and therefore does not release the long-lived connection.

It may be understood that, in a long-lived connection state, the terminal device needs to periodically wake up a processor (for example, a system on a chip SoC) and a Wi-Fi module of the terminal device, to send the heartbeat packet to the server. This generates specific power consumption. Generally, a heartbeat period of the terminal device ranges from one minute to tens of minutes. Therefore, the terminal device wakes up the SoC and the Wi-Fi module at a very high frequency. As a result, power consumption of the terminal device significantly increases, and a battery life of the terminal device is reduced.

### SUMMARY

Embodiments of this application provide a long-lived connection method and apparatus and a network system, to reduce power consumption of a terminal device and prolong a battery life of the terminal device.

According to a first aspect, an embodiment of this application provides a long-lived connection method. The method may be applied to a terminal device. The terminal device may establish a long-lived connection to a server by using an access point device. The method includes: The terminal device obtains first socket (socket) information of a long-lived connection from a TCP/IP protocol stack of the terminal device. The terminal device sends the first socket information to the access point device, so that the access point device sends a heartbeat packet to the server based on the first socket information. The heartbeat packet is used to maintain the long-lived connection between the terminal device and the server.

According to the method provided in this embodiment of this application, the access point device can act as a proxy for the terminal device to keep a heartbeat with the server, so that the terminal device does not need to frequently wake up a SoC and a Wi-Fi module to send heartbeat packets. Therefore, power consumption of the terminal device is reduced, and a battery life of the terminal device is prolonged.

In an optional implementation, that the terminal device obtains the first socket information of the long-lived connection from the TCP/IP protocol stack of the terminal device includes: The terminal device obtains the first socket information from the TCP/IP protocol stack when getting ready to enter a low power consumption state.

In an optional implementation, after the terminal device sends the first socket information to the access point device, the method further includes: The terminal device enters a low power consumption state.

In an optional implementation, after the terminal device sends the first socket information to the access point device, the method further includes: The terminal device receives second socket information sent by the access point device. The second socket information includes socket information maintained when the access point device maintains the long-lived connection.

In an optional implementation, that the terminal device receives second socket information sent by the access point device includes: The terminal device receives a beacon (beacon) frame and/or a null data (null data) frame sent by the access point device. The beacon frame and/or the null data frame include/includes the second socket information.

In an optional implementation, when ending a low power consumption state, the terminal device updates second socket information to a TCP/IP protocol stack.

In an optional implementation, the socket information includes a Transmission Control Protocol TCP sequence number seq and a TCP acknowledgment number ack.

According to a second aspect, an embodiment of this application provides a long-lived connection method. The method may be applied to an access point device, and includes: The access point device receives first socket information sent by a terminal device. The first socket information is obtained from a TCP/IP protocol stack of the terminal device in a case in which the terminal device establishes a long-lived connection to a server. The access point device sends a heartbeat packet to the server based on the first socket information. The heartbeat packet is used to maintain the long-lived connection between the terminal device and the server.

According to the method provided in this embodiment of this application, the access point device can act as a proxy for the terminal device to keep a heartbeat with the server, so that the terminal device does not need to frequently wake up a SoC and a Wi-Fi module to send heartbeat packets. Therefore, power consumption of the terminal device is reduced, and a battery life of the terminal device is prolonged.

In an optional implementation, after the access point device sends the heartbeat packet to the server based on the first socket information, the method further includes: The access point device sends second socket information to the terminal device. The second socket information includes socket information maintained when the access point device maintains the long-lived connection.

In an optional implementation, that the access point device sends second socket information to the terminal device includes: The access point device sends a beacon (beacon) frame and/or a null data (null data) frame to the terminal device. The beacon frame and/or the null data frame include/includes the second socket information.

In an optional implementation, when the terminal device is disconnected from the access point device, the access point device stops sending the heartbeat packet to the server.

In an optional implementation, when the access point device receives the heartbeat packet that is sent to the server by the terminal device, the access point device stops sending the heartbeat packet to the server.

In an optional implementation, the socket information includes a Transmission Control Protocol TCP sequence number seq and a TCP acknowledgment number ack.

According to a third aspect, this application provides a network system, including: a terminal device and an access point device. A first application APP is installed on the terminal device. The terminal device is configured to: in a screen-unlocked state, send, based on first socket information, a heartbeat packet to a server associated with the first APP. The heartbeat packet is forwarded to the server by using the first access point device, the heartbeat packet is used to maintain a long-lived connection between the terminal device and the server, and the first socket information is data required for maintaining the long-lived connection between the terminal device and the server. The terminal device is further configured to send the first socket information to the first access point device when switching from the screen-unlocked state to a screen-locked state. The first access point device is configured to: after receiving the first socket information, act as a proxy for the terminal device to send the heartbeat packet to the server based on the first socket information.

According to the network system provided in this embodiment of this application, when the terminal device establishes the long-lived connection to the server, the first access point device can act as the proxy for the terminal device to keep a heartbeat with the server, so that the terminal device in the screen-locked state does not need to frequently wake up a SoC and a Wi-Fi module to send heartbeat packets. Therefore, power consumption of the terminal device is reduced, and a battery life of the terminal device is prolonged.

In an optional implementation, the first access point device is further configured to send second socket information to the terminal device when acting as the proxy for the terminal device to send the heartbeat packet to the server. The second socket information is data that is generated by the first access point device when acting as the proxy for the terminal device to send the heartbeat packet to the server and that is used to maintain the long-lived connection.

In an optional implementation, the terminal device is specifically configured to: receive the second socket information by using a Wi-Fi module, and store the second socket information in the Wi-Fi module.

In an optional implementation, the terminal device is further configured to: when being disconnected from the first access point device in the screen-locked state, connect to a second access point device, and send heartbeat packets to the server based on the second socket information. The heartbeat packet is forwarded to the server by using the second access point device.

In an optional implementation, the terminal device is further configured to: when switching from the screen-locked state to the screen-unlocked state, send a heartbeat packet to the server based on the second socket information. The heartbeat packet is forwarded to the server by using the first access point device.

In an optional implementation, the terminal device is further configured to: when entering a low power consumption state in the screen-unlocked state, send the first socket information to the first access point device. The first access point device is further configured to: after receiving the first socket information, act as the proxy for the terminal device to send the heartbeat packet to the server based on the first socket information.

In an optional implementation, the terminal device is further configured to: when ending the low power consumption state in the screen-unlocked state, send a heartbeat packet to the server based on the second socket information. The heartbeat packet is forwarded to the server by using the first access point device.

In an optional implementation, the first access point device is specifically configured to periodically send a beacon (beacon) frame and/or a null data (null data) frame to the terminal device when acting as the proxy for the terminal device to send the heartbeat packet to the server. The beacon frame and/or the null data frame include/includes the second socket information.

In an optional implementation, the first access point device is further configured to: after receiving the heartbeat packet from the terminal device, stop acting as the proxy for the terminal device to send the heartbeat packet to the server.

According to a fourth aspect, an embodiment of this application provides a long-lived connection apparatus. The long-lived connection apparatus may be applied to a terminal device, and a first APP is installed on the terminal device. The long-lived connection apparatus includes a transceiver, a memory, and a processor. The memory includes program instructions. When the program instructions are run by the processor, the terminal device is enabled to perform the following method steps: in a screen-unlocked state, sending, based on first socket information, a heartbeat packet to a server associated with the first APP, where the heartbeat packet is forwarded to the server by using a first access point device, the heartbeat packet is used to maintain a long-lived connection between the terminal device and the server, and the first socket information is data required for maintaining the long-lived connection between the terminal device and the server; and sending the first socket information to the first access point device when switching from the screen-unlocked state to a screen-locked state, so that the first access point device acts as a proxy for the terminal device to send the heartbeat packet to the server based on the first socket information.

According to the long-lived connection apparatus provided in this embodiment of this application, when the terminal device establishes the long-lived connection to the server, the terminal device can send the first socket information to the first access point device when entering the screen-locked state, so that the first access point device can act as the proxy for the terminal device to keep a heartbeat with the server. In this way, the terminal device in the screen-locked state does not need to frequently wake up a SoC and a Wi-Fi module to send heartbeat packets. Therefore, power consumption of the terminal device is reduced and a battery life of the terminal device is prolonged.

In an optional implementation, the program instructions further enable the terminal device to perform the following method steps: receiving, by using a Wi-Fi module, second socket information sent by the access point device, and storing the second socket information in the Wi-Fi module. The second socket information is data that is generated by the first access point device when acting as the proxy for the terminal device to send the heartbeat packet to the server and that is used to maintain the long-lived connection.

In an optional implementation, the program instructions further enable the terminal device to perform the following method steps: when being disconnected from the first access point device in the screen-locked state, connecting to a second access point device, and sending a heartbeat packet to the server based on the second socket information. The heartbeat packet is forwarded to the server by using the second access point device.

In an optional implementation, the program instructions further enable the terminal device to perform the following method step: when switching from the screen-locked state to the screen-unlocked state, sending a heartbeat packet to the server based on the second socket information. The heartbeat packet is forwarded to the server by using the first access point device.

In an optional implementation, the program instructions further enable the terminal device to perform the following method step: when entering a low power consumption state in the screen-unlocked state, sending the first socket information to the first access point device, so that the first access point device acts as the proxy for the terminal device to send the heartbeat packet to the server based on the first socket information.

In an optional implementation, the program instructions further enable the terminal device to perform the following method step: when ending the low power consumption state in the screen-unlocked state, sending a heartbeat packet to the server based on the second socket information. The heartbeat packet is forwarded to the server by using the first access point device.

According to a fifth aspect, an embodiment of this application provides a long-lived connection apparatus. The long-lived connection apparatus may be applied to a first access point device. The apparatus includes a transceiver, a memory, and a processor. The memory includes program instructions. When the program instructions are run by the processor, the first access point device is enabled to perform the following method steps: receiving first socket information sent by a terminal device, where the first socket information is sent by the terminal device when switching from a screen-unlocked state to a screen-locked state, and the first socket information is data required for maintaining a long-lived connection between the terminal device and a server; acting as a proxy for the terminal device to send a heartbeat packet to the server based on the first socket information. The heartbeat packet is used to maintain the long-lived connection between the terminal device and the server.

According to the long-lived connection apparatus provided in this embodiment of this application, when the terminal device establishes the long-lived connection to the server, the terminal device can send the first socket information to the first access point device when entering the screen-locked state, so that the first access point device can act as the proxy for the terminal device to keep a heartbeat with the server. In this way, the terminal device in the screen-locked state does not need to frequently wake up a SoC and a Wi-Fi module to send heartbeat packets. Therefore, power consumption of the terminal device is reduced and a battery life of the terminal device is prolonged.

In an optional implementation, the program instructions further enable the first access point device to perform the following method step: sending second socket information to the terminal device when acting as the proxy for the terminal device to send the heartbeat packet to the server. The second socket information is data that is generated by the first access point device when acting as the proxy for the terminal device to send the heartbeat packet to the server and that is used to maintain the long-lived connection.

In an optional implementation, the program instructions further enable the first access point device to perform the following method step: periodically sending a beacon (beacon) frame and/or a null data (null data) frame to the terminal device when acting as the proxy for the terminal device to send the heartbeat packet to the server. The beacon frame and/or the null data frame include/includes the second socket information.

In an optional implementation, the program instructions further enable the first access point device to perform the following method step: after receiving the heartbeat packet from the terminal device, stopping acting as the proxy for the terminal device to send the heartbeat packet to the server.

According to a sixth aspect, an embodiment of this application further provides a computer-readable storage medium. The computer-readable storage medium stores instructions. When the instructions are run on a computer, the computer is enabled to perform the method according to the foregoing aspects.

According to a seventh aspect, an embodiment of this application further provides a computer program product that includes instructions. When the computer program product runs on a computer, the computer is enabled to perform the method according to the foregoing aspects.

According to an eighth aspect, an embodiment of this application further provides a chip system. The chip system includes a processor, configured to support the foregoing apparatus or system in implementing a function in the foregoing aspects, for example, generating or processing information in the foregoing method.

### BRIEF DESCRIPTION OF DRAWINGS

FIG. 1 is a schematic diagram of an end-to-end connection between a terminal device and a server according to an embodiment of this application;
FIG. 2 is a schematic diagram of a structure of an access point device 200 according to an embodiment of this application;
FIG. 3 is a schematic diagram of a structure of a terminal device 100 according to an embodiment of this application;
FIG. 4 is a schematic diagram in which a terminal device establishes a long-lived connection to an application server;
FIG. 5A and FIG. 5B show a scenario in which a terminal device establishes a long-lived connection to a server;
FIG. 6A and FIG. 6B show a scenario in which a terminal device enters a low power consumption state;
FIG. 7A and FIG. 7B show another scenario in which a terminal device enters a low power consumption state;
FIG. 8 shows still another scenario in which a terminal device enters a low power consumption state;
FIG. 9 shows a manner in which a terminal device maintains a long-lived connection to a server in a low power consumption state;
FIG. 10 shows another manner in which a terminal device maintains a long-lived connection to a server in a low power consumption state;
FIG. 11 is a flowchart of a connection establishment phase of a long-lived connection method according to an embodiment of this application;
FIG. 12 is a flowchart of a proxy connection phase of a long-lived connection method according to an embodiment of this application;
FIG. 13 is a flowchart of step S105 of a long-lived connection method according to an embodiment of this application;
FIG. 14 is a flowchart of step S302 of a long-lived connection method according to an embodiment of this application;
FIG. 15 is a flowchart of step S302 of a long-lived connection method according to an embodiment of this application;
FIG. 16 is a flowchart in which an access point device sends a proxy success message;
FIG. 17 is a flowchart in which a terminal device withdraws a proxy according to an embodiment of this application;
FIG. 18 is a scenario diagram in which a terminal device is disconnected from an access point device;
FIG. 19 is a scenario diagram in which a terminal device is disconnected from an access point device;
FIG. 20 is a flowchart of a proxy ending phase of a long-lived connection method according to an embodiment of this application;
FIG. 21 is a schematic diagram in which a terminal device sends a heartbeat packet via a base station;
FIG. 22 is a schematic diagram in which a routing device acts as a proxy for a terminal device to send a heartbeat packet when the terminal device is screen-locked;
FIG. 23 is a schematic diagram in which a terminal device sends a heartbeat packet by using a routing device;
FIG. 24 is a schematic diagram in which a terminal device sends a heartbeat packet after being disconnected from a routing device;
FIG. 25 is a schematic diagram in which a routing device acts a proxy for a terminal device to send a heartbeat packet when the terminal device is in a low power consumption state;
FIG. 26 is a schematic diagram of a structure of a long-lived connection apparatus according to an embodiment of this application;
FIG. 27 is a schematic diagram of a structure of another long-lived connection apparatus according to an embodiment of this application;
FIG. 28 is a schematic diagram of a structure of another long-lived connection apparatus according to an embodiment of this application; and
FIG. 29 is a schematic diagram of a structure of a chip system according to an embodiment of this application.

### DESCRIPTION OF EMBODIMENTS

Two node devices in the Internet, for example, a terminal device running an application and a server running the application, may establish an end-to-end connection based on a transport layer protocol such as the Transmission Control Protocol TCP or the User Datagram Protocol UDP, to transmit data.

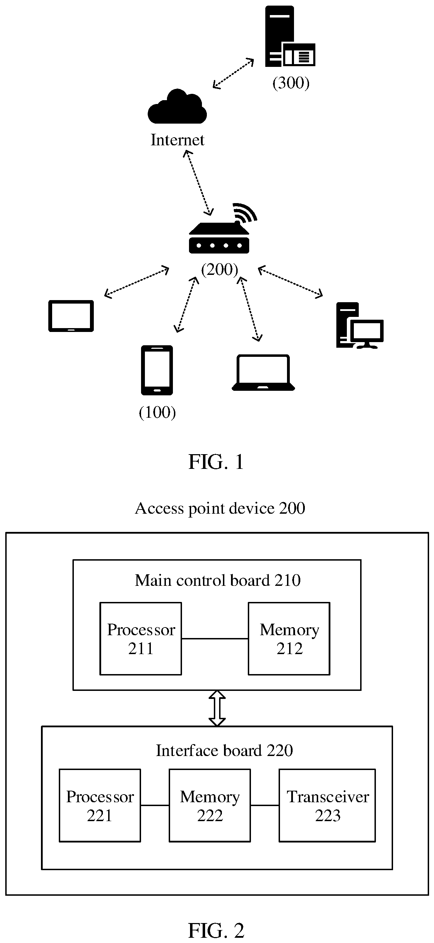

FIG. 1 is a schematic diagram of an end-to-end connection between a terminal device and a server according to an embodiment of this application. As shown in FIG. 1, a terminal device 100 may establish an end-to-end connection to a server 300 by using an access point device 200. The access point device 200 may include, for example, a wireless router. The access point device 200 can access the Internet and communicate with another network device (for example, the server 300) in the Internet. The access point device 200 can further establish a Wireless Fidelity (wireless fidelity, Wi-Fi) local area network for access by another network device (for example, the terminal device 100). The terminal device 100 may include, for example, a mobile phone, a tablet computer, a personal computer, a workstation device, a large-screen device (for example, a smart screen or a smart TV), a handheld game console, a home game console, a virtual reality device, an augmented reality device, or a mixed reality device. The terminal device 100 may have a Wi-Fi module, and can access the Wi-Fi local area network by using the Wi-Fi module, and communicate with the access point device 200 via a Wi-Fi link. When the terminal device 100 sends a packet to the server 300, the terminal device 100 sends the packet to the access point device 200 via the Wi-Fi link, and the access point device 200 forwards the packet to the server 300 by using a routing table. When the server 300 sends a packet to the terminal device 100, the server 300 sends the packet to the access point device 200, and the access point device 200 forwards the packet to the terminal device 100.

FIG. 2 is a schematic diagram of a structure of the access point device 200 according to an embodiment of this application. For example, the access point device may specifically include a main control board 210 and an interface board 220. The main control board 210 may include a processor 211 and a memory 212, and the processor 211 is coupled to the memory 212. The memory 212 stores program instructions, and the processor 211 may invoke the program instructions in the memory 212, so that the access point device 200 performs a related method, for example, parsing a packet or generating a packet. The interface board 220 may include the processor 221, the memory 222, and a transceiver 223. The processor 221, the memory 222, and the transceiver 223 are coupled. The memory 222 stores program instructions, and the processor 221 may invoke the program instructions in the memory 222, so that the access point device performs a related method, for example, receiving and forwarding a packet by using the transceiver 223. In this embodiment of this application, the transceiver 223 is configured to establish a communication link to another access point device, to implement packet receiving and sending. The main control board 210 and the interface board 220 may establish a connection by using a bus, to implement data exchange.

In this embodiment of this application, the processor of the access point device 200 may include one or more processing units, for example, a central processing unit (central processing unit, CPU), a micro controller unit (micro controller unit, MCU), a storage controller, and a baseband processor. Different processing units may be independent components, or may be integrated into one or more processors, for example, integrated into a system on a chip (system on a chip, SoC).

In this embodiment of this application, the memory of the access point device 200 may include one or more storage units, for example, may include a volatile memory (volatile memory), such as a dynamic random access memory (dynamic random access memory, DRAM), or a static random access memory (static random access memory, SRAM); and may further include a non-volatile memory (non-volatile memory, NVM), such as a read-only memory (read-only memory, ROM), and a flash memory (flash memory). Different storage units may be independent components, or may be integrated or packaged into one or more processors as a part of the processor.

In this embodiment of this application, the transceiver of the access point device 200 may include, for example, a radio frequency circuit, an antenna, and a baseband circuit. The transceiver may be an independent component, or may be partially or completely integrated or packaged into the processor as a part of the processor.

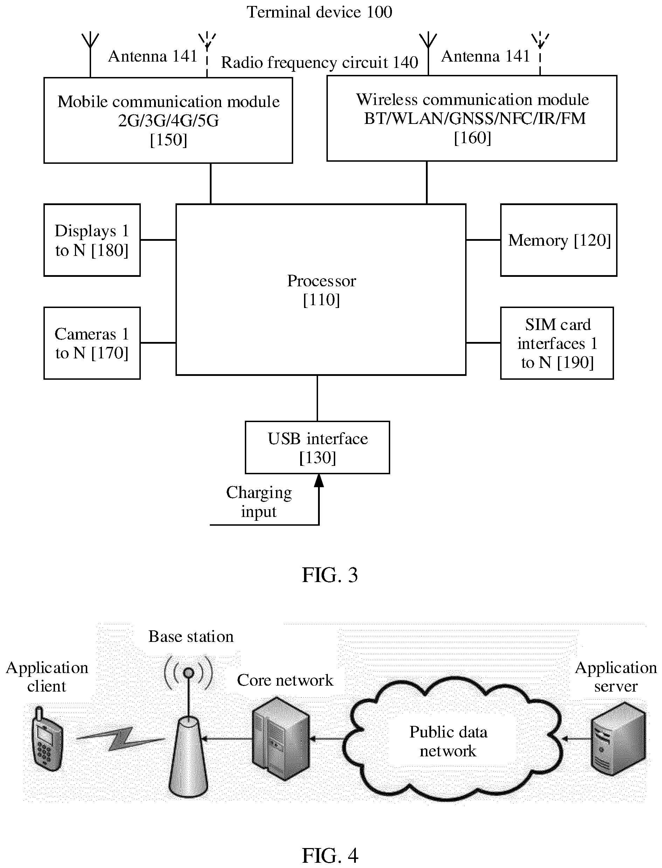

FIG. 3 is a schematic diagram of a structure of the terminal device 100 according to an embodiment of this application. As shown in FIG. 3, the terminal device 100 may include a processor 110, a memory 120, a universal serial bus (universal serial bus, USB) interface 130, a radio frequency circuit 140, a mobile communication module 150, a wireless communication module 160, a camera 170, a display 180, a subscriber identity module (subscriber identification module, SIM) card interface 190, and the like.

The processor 110 may include one or more processing units. For example, the processor 110 may include an application processor (application processor, AP), a modem processor, a graphics processing unit (graphics processing unit, GPU), an image signal processor (image signal processor, ISP), a video codec, a digital signal processor (digital signal processor, DSP), a baseband processor, a neural-network processing unit (neural-network processing unit, NPU), and/or the like. Different processing units may be independent components, or may be integrated into one or more processors, for example, integrated into a system on a chip (system on a chip, SoC). A memory may be further disposed in the processor 110, and is configured to store instructions and data. In some embodiments, the memory in the processor 110 is a cache memory. The memory may store instructions or data just used or cyclically used by the processor 110.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The memory 120 may be configured to store computer-executable program code, and the executable program code includes instructions. The memory 120 may include a program storage area and a data storage area. The program storage area may store an operating system, an application required by at least one function (for example, a voice playing function or an image playing function), and the like. The data storage area may store data (for example, audio data and a phone book) and the like created during use of the terminal device 100. In addition, the memory 120 may include one or more storage units, for example, may include a volatile memory (volatile memory), such as a dynamic random access memory (dynamic random access memory, DRAM), or a static random access memory (static random access memory, SRAM); and may further include a non-volatile memory (non-volatile memory, NVM), such as a read-only memory (read-only memory, ROM), and a flash memory (flash memory). The processor 110 runs the instructions stored in the memory 120 and/or the instructions stored in the memory disposed in the processor, to perform various function applications of the terminal device 100 and data processing.

A wireless communication function of the terminal device 100 may be implemented by using the radio frequency circuit 140, the mobile communication module 150, the wireless communication module 160, the modem processor, the baseband processor, and the like.

The radio frequency circuit 140 may include at least one antenna 141, configured to transmit and receive an electromagnetic wave signal. Each antenna in the terminal device 100 may be configured to cover one or more communication frequency bands. Different antennas may be further multiplexed, to improve antenna utilization. For example, the antenna 141 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal device 100. The mobile communication module 150 may include at least one filter, a switch, a power amplifier, a low noise amplifier (low noise amplifier, LNA), and the like. The mobile communication module 150 may receive an electromagnetic wave through the antenna 141, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 141. In some embodiments, at least some functional modules in the mobile communication module 150 may be disposed in the processor 110. In some embodiments, at least some functional modules in the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which includes but is not limited to a speaker, a receiver, or the like), or displays an image or a video on the display 180. In some embodiments, the modem processor may be an independent component. In some other embodiments, the modem processor may be independent of the processor 110, and is disposed in a same component along with the mobile communication module 150 or another functional module.

The wireless communication module 160 may include a Wi-Fi module, a Bluetooth (Bluetooth, BT) module, a global navigation satellite system (global navigation satellite system, GNSS) module, a Near Field Communication (near field communication, NFC) module, an infrared (infrared, IR) module, and the like. The wireless communication module 160 may be one or more components integrating at least one module. The wireless communication module 160 receives an electromagnetic wave through the antenna 141, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 141.

In this embodiment of this application, the wireless communication functions of the terminal device 100 may include, for example, functions such as a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), Sth generation mobile networks new radio (Sth generation mobile networks new radio, SG NR), BT, a GNSS, WLAN, NFC, FM, and/or IR. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The camera 170 is configured to capture a static image or a video. The camera 170 includes a lens and a photosensitive element. An optical image of an object is generated through the lens, and is projected onto the image sensor. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB, YUV, or RYYB. In some embodiments, the terminal device 100 may include one or N cameras 170, where N is a positive integer greater than 1.

The NPU is a neural-network (neural-network, NN) processing unit. The NPU quickly processes input information with reference to a structure of a biological neural network, for example, a transfer mode between human brain neurons, and may further continuously perform self-learning. The NPU can implement applications such as intelligent cognition of the terminal device 100, for example, image recognition, facial recognition, speech recognition, and text understanding.

The display 180 is configured to display an image, a video, and the like. The display 180 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 180, where N is a positive integer greater than 1.

The SIM card interface 190 is configured to connect to a SIM card. The SIM card may be inserted into the SIM card interface 190 or removed from the SIM card interface 190, to implement contact with or separation from the terminal device 100. The terminal device 100 may support one or N SIM card interfaces, where N is a positive integer greater than 1. The SIM card interface 190 may support a nano-SIM card, a micro-SIM card, a SIM card, and the like. A plurality of cards may be inserted into a same SIM card interface 190 at the same time. The plurality of cards may be of a same type or different types. The SIM card interface 190 may be compatible with different types of SIM cards. The SIM card interface 190 is also compatible with an external memory card. The terminal device 100 interacts with a network by using the SIM card, to implement functions such as calling and data communication. In some embodiments, the terminal device 100 uses an eSIM card, namely, an embedded SIM card. The eSIM card may be embedded in the terminal device 100, and cannot be separated from the terminal device 100.

It can be understood that the structure shown in this embodiment does not constitute a specific limitation on the access point device and the terminal device. In some other embodiments of this application, the access point device and the terminal device may include more or fewer components than those shown in the figure, or some components may be combined, or some components may be split, or different component arrangements may be used. The components shown in the figure may be implemented by hardware, software, or a combination of software and hardware.

Refer to FIG. 4. An application installed on the terminal device establishes a long-lived connection to a remote application server through a network. If there is no data communication over the long-lived connection in a specific time period, a core network disconnects from the long-lived connection. Therefore, the application needs to maintain the long-lived connection to the application server by using a heartbeat mechanism. The heartbeat mechanism is periodical transmission of a heartbeat packet between a terminal device and a server, to ensure a normal long-lived connection. For example, the terminal device sends a heartbeat packet to the server at a regular interval. If the server responds to the heartbeat packet in a specific time period, it indicates that the terminal device is normally connected to the server. If the server does not respond to the heartbeat packet in a specific time period, it indicates that the terminal device is disconnected from the server. After a disconnection is learned, remedial actions such as fault detection and reconnection may be used. Alternatively, a heartbeat service may be implemented in a manner in which the server actively sends a heartbeat packet to the terminal device, or in another manner.

The application generally has a preset heartbeat period to meet a need of a current application service. If applications on the terminal device have different heartbeat start points and different periods, the terminal device needs to wake up a modem of the terminal device for a plurality of times at different time points to establish a connection to an access point device (for example, a base station or a routing device), and send a single heartbeat packet to each application server. If all applications perform heartbeat services by using a same heartbeat period, a plurality of heartbeat packets may be sent through one connection, so that energy consumption and waste of signaling are effectively reduced.

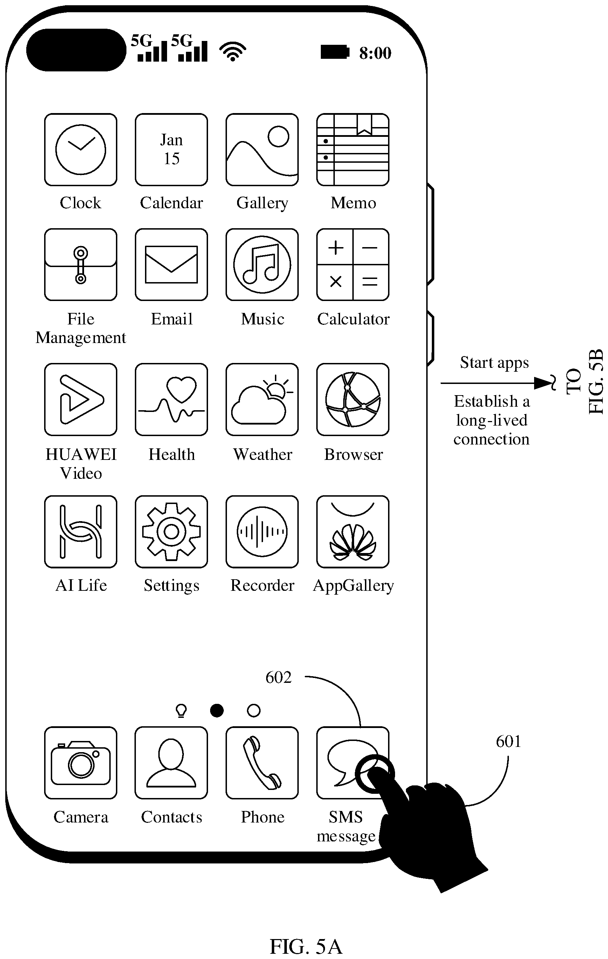

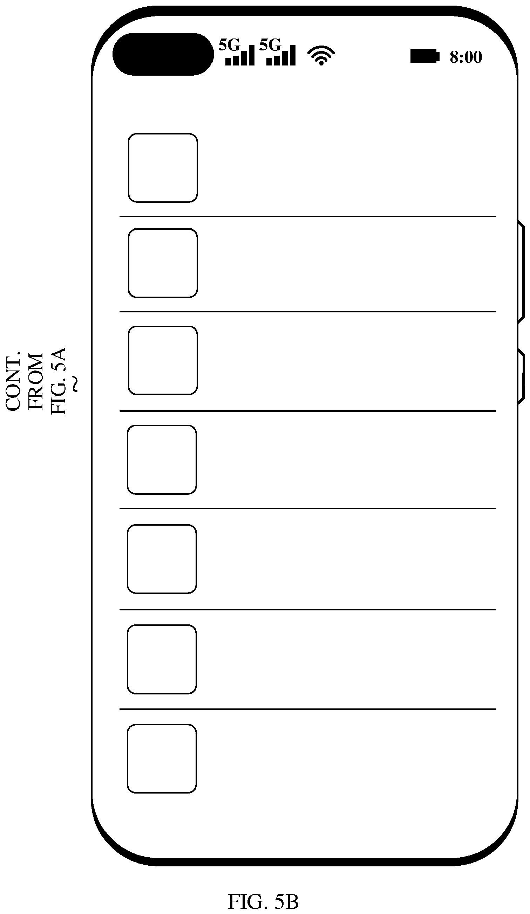

For ease of understanding, FIG. 5A and FIG. 5B show a use scenario of a terminal device, to describe, as an example, a case in which the terminal device needs to establish a long-lived connection to a server. As shown in FIG. 5A and FIG. 5B, when the terminal device receives an operation of tapping an icon 602 of an application 601 by a user, the application is started. In this case, the terminal device may establish a long-lived connection to a server of the application, so that the application subsequently sends data to the server and receives data actively sent by the server. Such an application may be, for example, an instant messaging application or a game application.

When the terminal device needs to establish a long-lived connection to a server, the terminal device may initiate a connection request to the server. After receiving the connection request, if the terminal device agrees to establish the connection, the terminal device establishes the long-lived connection to the terminal device. This process generally requires a three-way handshake between the terminal device and the server. After the terminal device establishes the long-lived connection to the server, packet transmission may be performed through the long-lived connection. For example, the terminal device actively sends a packet to the server, or the server actively sends a packet to the terminal device.

Compared with a short connection, the long-lived connection allows the server to actively push a message to the terminal device. Therefore, the long-lived connection may be used to implement real-time communication between an application and the server. The real-time communication means that when the server needs to send a message to the terminal device, the server may push the message to the terminal device in real time through the long-lived connection, and the terminal device does not need to initiate a request to the server in a polling manner to ask whether there is a new message. For example, if social software is installed on the terminal device, the terminal device may establish a long-lived connection to a server of the social software or a push server of a terminal device manufacturer. In this case, when a new message arrives at the server, the server may directly push the message to the terminal device through the long-lived connection, so that a user of the terminal device can view the message in time.

The terminal device may maintain the long-lived connection to the server according to a heartbeat mechanism. The terminal device may preset a period for sending a heartbeat packet to the server, for example, 5 minutes or 10 minutes. After the terminal device establishes the long-lived connection to the server, if the terminal device does not generate data that needs to be sent to the server at this moment, the terminal device periodically sends a heartbeat packet to the server according to the set period, to maintain a connection to the server. In addition, if the server receives the heartbeat packet sent by the terminal device, the server may determine that the terminal device is in an online state. If the server does not receive the heartbeat packet sent by the terminal device in several consecutive periods (for example, three periods), the server may consider that the terminal device is an offline state, and the server may be disconnected from the terminal device. In addition, after receiving the heartbeat packet sent by the terminal device, the server may further respond to the heartbeat packet, that is, send an acknowledgment packet to the terminal device, so that the terminal device determines that the server is in an online state. If the terminal device does not receive the acknowledgment packet from the server in several consecutive periods (for example, three periods), the terminal device may consider that the server is in an offline state, and the terminal device may be disconnected from the server.

To reduce power consumption, the terminal device enters a low power consumption state in some scenarios. In some embodiments, when the terminal device is in the low power consumption state, an application processor of the terminal device may be in a sleep state. When receiving data, the baseband processor may wake up the application processor, send the received data to the application processor, and run at a relatively low frequency to reduce power consumption.

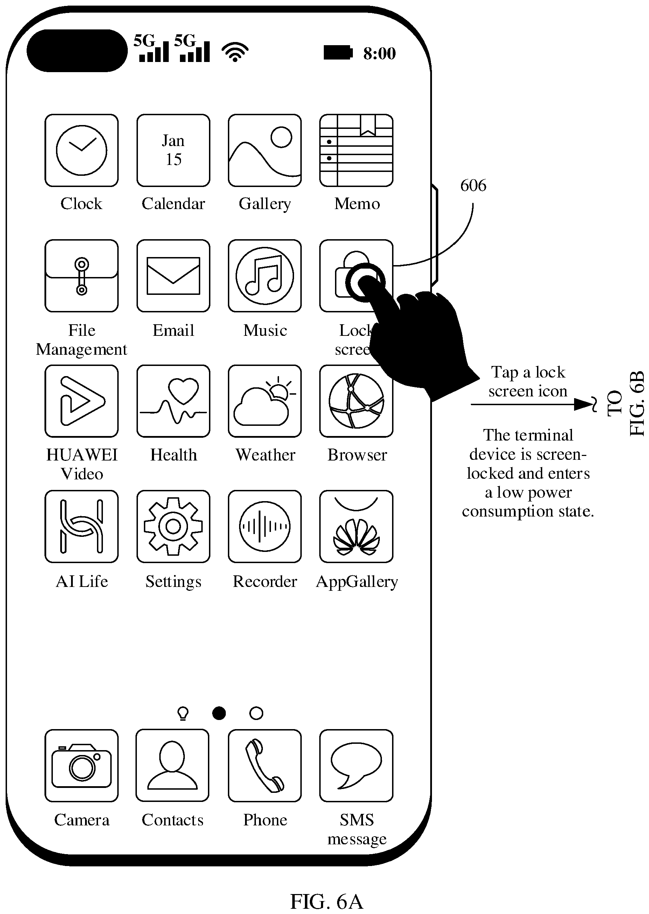

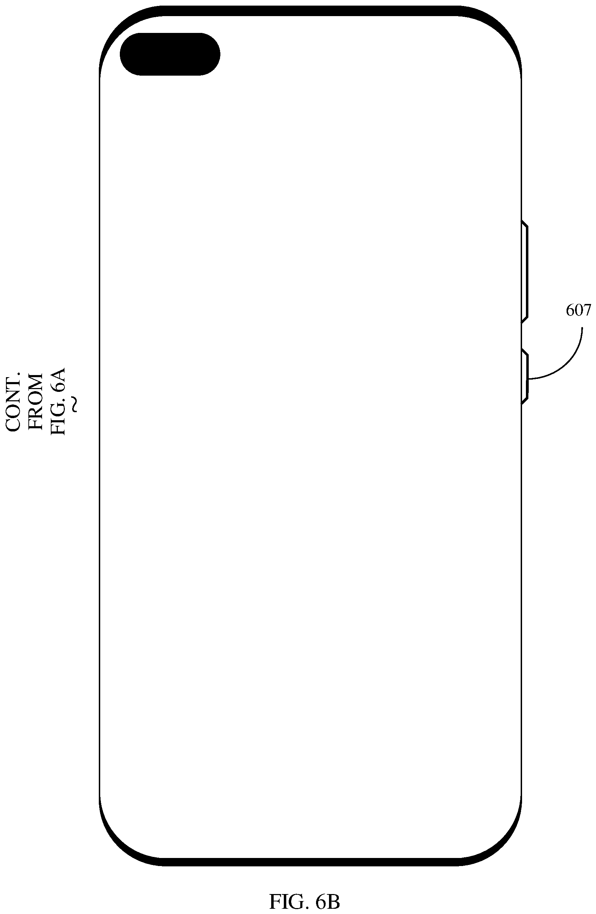

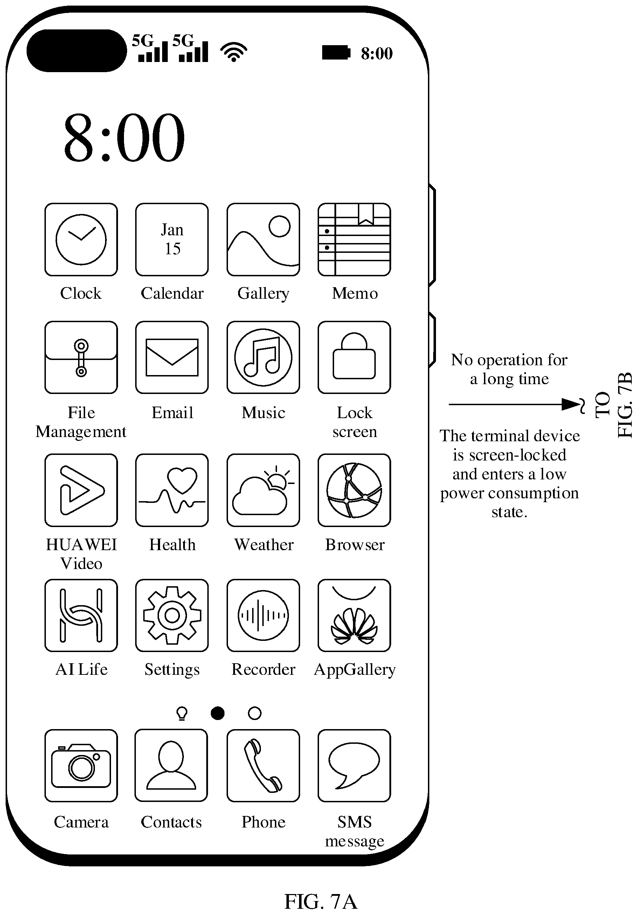

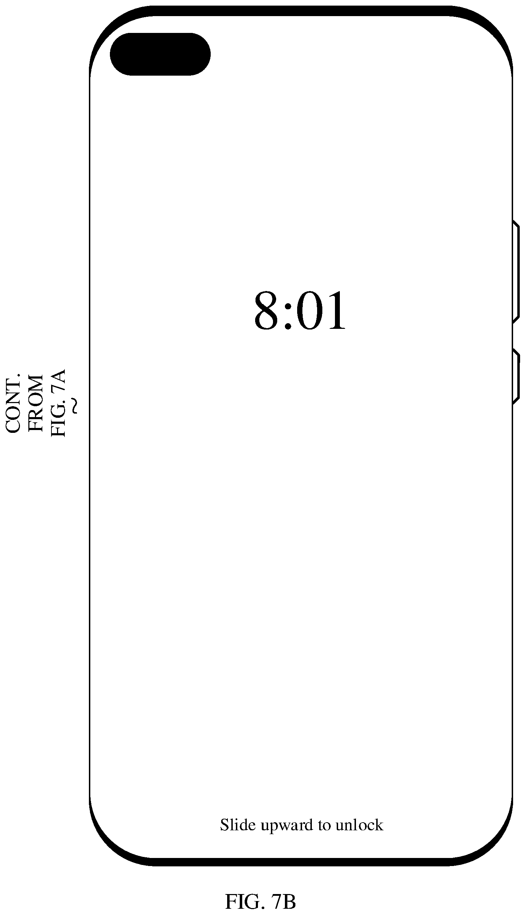

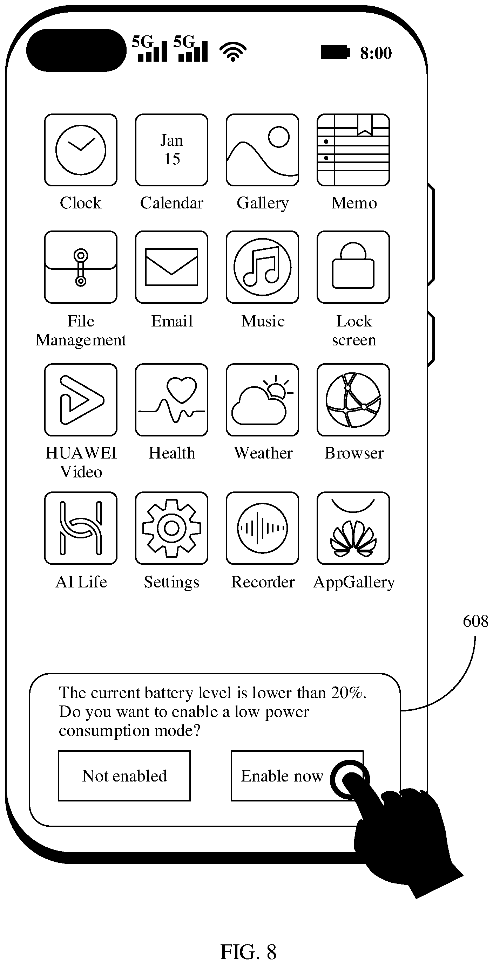

For ease of understanding, FIG. 6A and FIG. 6B to FIG. 8 show some scenarios in which the terminal device enters the low power consumption state, to describe, as an example, a case in which the terminal device enters the low power consumption state. As shown in FIG. 6A and FIG. 6B, when the terminal device receives an operation of tapping a screen locking icon 606 or pressing a lock screen button 607 by the user, the terminal device locks a screen, turns off the screen, and enters a standby mode. In this case, the terminal device may enter the low power consumption state, to reduce standby power consumption. As shown in FIG. 7A and FIG. 7B, when the terminal device does not receive an operation of the user within a time period (for example, within one minute), the terminal device locks a screen, turns off the screen, and enters a standby mode. In this case, the terminal device may enter the low power consumption state, to reduce standby power consumption. As shown in FIG. 8, when power of the terminal device is insufficient, for example, the power is lower than 20%, the terminal device may pop up, on a display, a dialog box 608 used to ask the user whether a low power consumption mode needs to be enabled, to prolong a battery life of the terminal device. For example, the dialog box 608 may include two buttons: "Not enabled" and "Enable now". If the terminal device receives an operation of tapping the "Enable now" button by the user, the terminal device enters the low power consumption state, until the terminal device receives an operation of disabling the low power consumption mode by the user or the terminal device is connected to an external power supply. In addition, the terminal device may further execute a power management policy that is set by the user according to time or a trigger condition, to enter or leave the low power consumption state according to the power management policy. For example, the terminal device enters the low power consumption state at night.

Currently, an end-to-end connection scenario shown in FIG. 1 is used as an example. The terminal device may send a heartbeat packet to the server in the following two manners, to maintain a long-lived connection.

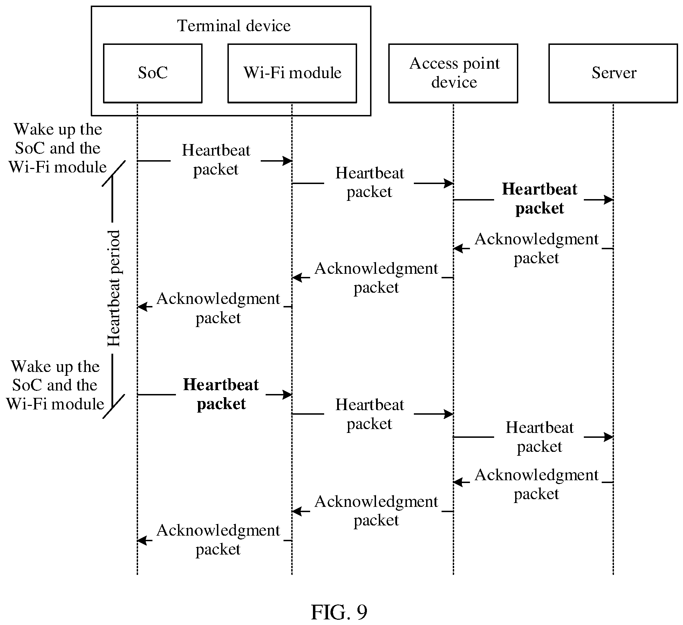

A first manner is shown in FIG. 9. In the low power consumption state, the terminal device periodically wakes up a SoC and a Wi-Fi module, and sends the heartbeat packet to the server by using the SoC and the Wi-Fi module. This process specifically includes: The SoC sends the heartbeat packet to the Wi-Fi module of the terminal device. After receiving the heartbeat packet, the Wi-Fi module sends the heartbeat packet to the access point device via a Wi-Fi link to the access point device. After receiving the heartbeat packet, the access point device forwards the heartbeat packet to the server. In this way, the server confirms existence of the terminal device. After receiving the heartbeat packet, the server may further respond with an acknowledgment packet to the terminal device. If the access point device receives the acknowledgment packet sent by the server, the access point device sends the acknowledgment packet to the Wi-Fi module via the Wi-Fi link. After receiving the heartbeat packet, the Wi-Fi module further sends the acknowledgment packet to the SoC. In this way, the terminal device confirms that the server is in an online state. In the first manner, the terminal device needs to periodically wake up the SoC and the Wi-Fi module to send heartbeats. Therefore, each time the terminal device sends a heartbeat, the SoC and the Wi-Fi module generate specific power consumption. Generally, a heartbeat period (namely, an interval at which the terminal device wakes up the SoC and the Wi-Fi module) of the terminal device ranges from 1 minute to tens of minutes. Therefore, the terminal device wakes up the SoC and the Wi-Fi module very frequently. As a result, power consumption of the terminal device increases, and a battery life of the terminal device is reduced.

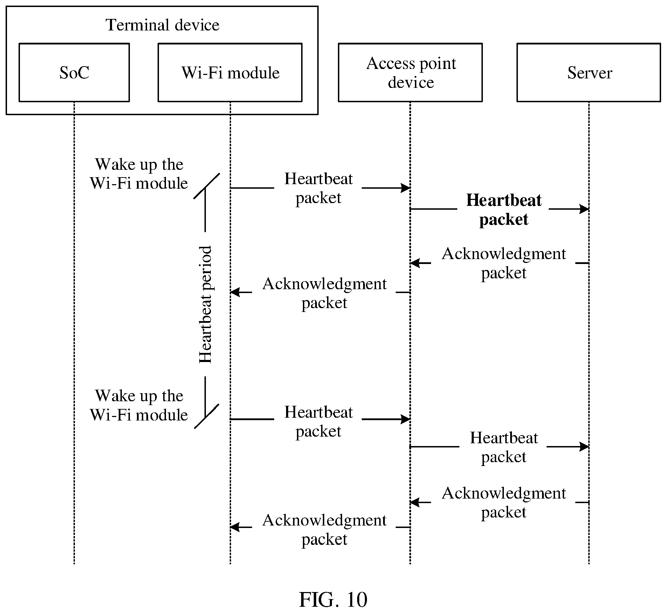

A second manner is shown in FIG. 10. In the low power consumption state, a Wi-Fi module of the terminal device stores information required for sending a heartbeat packet, and the Wi-Fi module acts as a proxy for a SoC to send the heartbeat packet to the server. This process includes: The Wi-Fi module sends the heartbeat packet to the access point device via a Wi-Fi link to the access point device. After receiving the heartbeat packet, the access point device forwards the heartbeat packet to the server. In this way, the server confirms existence of the terminal device. In addition, if the access point device receives an acknowledgment packet sent by the server, the access point device further sends the acknowledgment packet to the Wi-Fi module via the Wi-Fi link. In the second manner, the SoC may maintain a low power consumption state without being woken up. Therefore, power consumption is lower than that in the first manner. However, in the second manner, the Wi-Fi module still needs to be woken up periodically. As a result, power consumption of the terminal device still increases, and a battery life of the terminal device is reduced.

In some embodiments, when the terminal device is connected to the access point device (for example, a base station) by using a cellular module, the terminal device may also send heartbeat information to the server by using the cellular module. For example, when performing data communication by using the cellular module, the terminal device may perform, by using cellular data, a heartbeat test on a server associated with an application, to maintain a long-lived connection. When the terminal device switches from cellular communication to Wi-Fi communication, the terminal device may send data for maintaining a heartbeat service to the access point device (for example, a router). After the terminal device is screen-locked or the terminal device enters a standby state, the access point device may perform, by using cellular data, provide a heartbeat service to the server associated with the application. Further, after the terminal device is screen-on or screen-unlocked, the terminal device may further perform a heartbeat service by using the cellular module. When disconnecting from the Wi-Fi communication, the terminal device may further continue to perform a heartbeat service by using the cellular module.

To further reduce power consumption of a terminal device in a low power consumption state, an embodiment of this application further provides a long-lived connection method. The method may be applied to a scenario shown in FIG. 1. The method may include, for example, a connection establishment phase, a proxy connection phase, and a proxy cancellation phase.

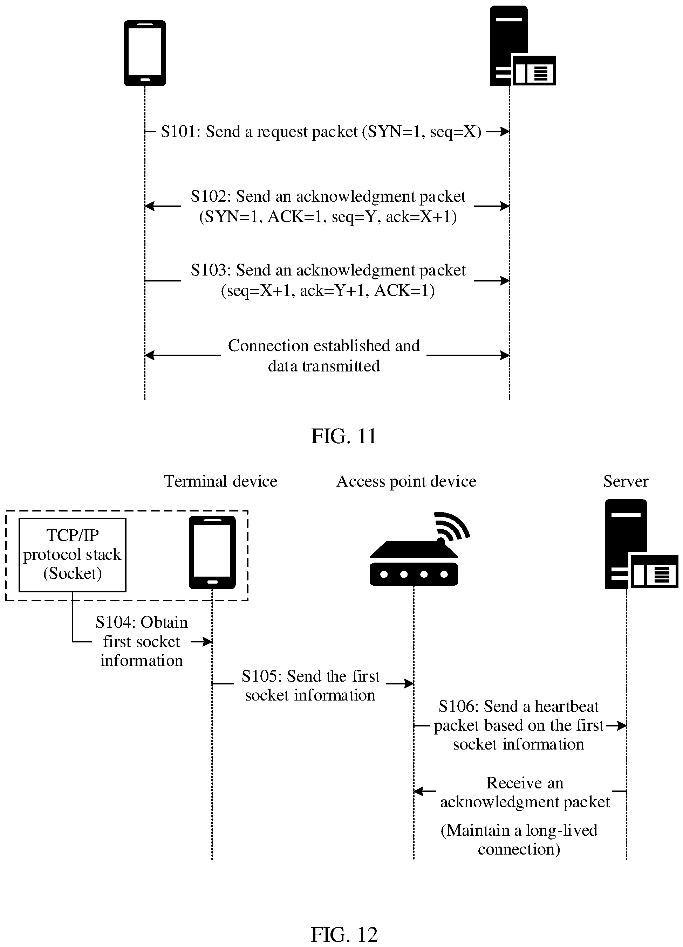

As shown in FIG. 11, the connection establishment phase of the long-lived connection method provided in this embodiment of this application may include steps S101 to S103.

Step S101: When the terminal device needs to establish a long-lived connection to a server, the terminal device sends a request packet to the server through a socket (socket) programming interface.

A packet header of the request packet used to establish the long-lived connection may include the following two fields: a connection establishment flag bit (synchronous, SYN) and a TCP sequence number (sequence number, seq).

In specific implementation, a SoC of the terminal device may create a socket session, and initially set seq=X for the socket session. X may be a random value. Then, the SoC sends a request packet including seq=X to the server. In the request packet, SYN=1. For ease of description, a request packet (SYN=1, seq=X) is written herein, and the request packet (SYN=1, seq=X) may be sent to the server by using a Wi-Fi module and an access point device.

Step S102: After receiving the request packet, if the server agrees to establish the connection, the server sends an acknowledgment packet to the terminal device.

A packet header of the acknowledgment packet may include the following four fields: an acknowledgment flag bit (acknowledgement, ACK), a connection establishment flag bit (synchronous, SYN), a TCP sequence number seq, and a TCP acknowledgment number (acknowledgement number, ack).

In specific implementation, after receiving the request packet (SYN=1, seq=X), the server may initially set seq=Y Y may be a random value. Then, the server adds 1 to seq in the request packet (SYN=1, seq=X), to obtain a value of ack, that is, ack=X+1. Then, the server sends an acknowledgment packet including seq=Y, ack=X+1 to the terminal device. In the acknowledgment packet, SYN=1, and ACK=1. For ease of description, an acknowledgment packet (SYN=1, ACK=1, seq=Y, ack=X+1) is written herein, and the acknowledgment packet (SYN=1, ACK=1, seq=Y, ack=X+1) may be sent to the terminal device by using the access point device and the Wi-Fi module.

Step S103: After receiving the acknowledgment packet from the server, the terminal device sends an acknowledgment packet to the server.

A packet header of the acknowledgment packet may include the following three fields: an acknowledgment flag bit ACK, a TCP sequence number seq, and a TCP acknowledgment number ack.

In specific implementation, after the terminal device receives the acknowledgment packet (SYN=1, ACK=1, seq=Y, ack=X+1), the SoC may add 1 to seq used for sending a packet last time, to obtain seq of a packet sent this time, that is, seq=X+1. In addition, the SoC may add 1 to seq in the acknowledgment packet (SYN=1, ACK=1, seq=Y, ack=X+1), to obtain ack of the packet sent this time, that is, ack=Y+1. Then, the SoC sends an acknowledgment packet including seq=X+1, ack=Y+1 to the server. In the acknowledgment packet, ACK=1. For ease of description, an acknowledgment packet (seq=X+1, ack=Y+1, ACK=1) is written herein, and the acknowledgment packet (seq=X+1, ack=Y + 1, ACK=1) may be sent to the server by using the Wi-Fi module and the access point device.

The foregoing step S101 to step S103 are also referred to as a three-way handshake in a TCP. After the three-way handshake, the terminal device may establish the long-lived connection to the server, and subsequent data transmission is performed through the long-lived connection.

It should be additionally noted that information such as seq and ack included in the foregoing packet may be referred to as Socket information of the long-lived connection, and the Socket information may be stored in a TCP/IP protocol stack of the terminal device. For example, for a terminal device running the Android system, a TCP/IP protocol stack of the terminal device is located in a Linux kernel (Linux kernel) of the Android system. Therefore, Socket information is stored in the TCP/IP protocol stack of the kernel of the Android system. In addition, after the long-lived connection is established, as packets are received and sent between the terminal device and the server, socket information stored in the TCP/IP protocol stack changes constantly. Generally, the socket information stored in the TCP/IP protocol stack may include socket information of a last packet received and sent by the terminal device.

After the terminal device establishes the long-lived connection to the server, if no data is transmitted between the terminal device and the server, the terminal device may periodically send a heartbeat packet to the server to maintain the long-lived connection.

In an implementation, the terminal device may send a heartbeat packet to the server in a timer (timer) event. For example, the timer event may start a countdown when the heartbeat packet is sent. In a countdown process, the terminal device continuously detects whether an acknowledgment packet sent by the server is received. If the terminal device still does not receive the acknowledgment packet from the server when the countdown ends, the terminal device may consider that the server is offline. If the terminal device receives the acknowledgment packet from the server in the countdown process, the terminal device may determine that the server is online. In this case, the terminal device may continue to maintain the long-lived connection to the server, and when the countdown ends, the terminal device resets the timer event, to send a heartbeat packet to the server again.

In an implementation, the terminal device may periodically send a heartbeat packet to the server by using a KeepAlive function of the TCP. For example, when the terminal device enables the KeepAlive function of the TCP, if no data is transmitted between the terminal device and the server within a time period, the terminal device sends a heartbeat packet to the server. If the server receives the heartbeat packet, the server responds with an acknowledgment packet to the terminal device to notify the terminal device of existence of the server. In this case, the terminal device may continue to maintain the long-lived connection to the server. If the terminal device does not receive the acknowledgment packet within a time period, the terminal device sends a heartbeat packet to the server again. If the terminal device still does not receive the acknowledgment packet after several retries, the terminal device is disconnected from the server.

A heartbeat packet may be a null packet that includes only a packet header but does not include data. A packet header of the heartbeat packet may include a seq field. A value of seq may be a value of seq in a packet that is sent by the terminal device to the server last time and that is stored in the TCP/IP protocol stack. For example, in the packet sent by the terminal device to the server last time, seq=X+ 1. In this case, in the heartbeat packet, seq=X+1. A heartbeat packet (seq=X+1) is written herein.

An acknowledgment packet sent by the server as a response to the heartbeat packet may be a null packet that includes only a packet header but does not include data. A packet header of the acknowledgment packet may include an ack field. A value of ack may be a value of seq of the heartbeat packet plus 1. For example, when the server receives the heartbeat packet (seq=X+1), in the acknowledgment packet, ack=X+2. An acknowledgment packet (ack=X+2) is written herein.

As shown in FIG. 12, the proxy connection phase of the long-lived connection method provided in this embodiment of this application may include steps S104 to S106.

Step S104: In a case in which the terminal device establishes the long-lived connection to the server, the terminal device obtains first socket information of the long-lived connection from a TCP/IP protocol stack of the terminal device.

In specific implementation, the terminal device may perform the step S104 when getting ready to enter the low power consumption state. For example, in FIG. 6A and FIG. 6B, when a user taps a screen locking icon on a display of the terminal device, or presses a screen locking button on a body of the terminal device, the terminal device may perform the step S104. In FIG. 7A and FIG. 7B, when the user does not operate the terminal device within a time period (for example, within one minute), the terminal device may perform the step S104. In FIG. 8, when power of the terminal device is insufficient, if the user taps an "Enable immediately" button in a dialog box popped up on the display of the terminal device, the terminal device may perform the step S104.

The first socket information may include seq and ack information that are stored in the TCP/IP protocol stack when the terminal device gets ready to enter the low power consumption state. The seq and ack information may be seq and ack information in a packet received from and sent to the server by the terminal device last time.

Step S105: The terminal device sends the first socket information to the access point device, so that the access point device sends a heartbeat packet to the server based on the first socket information, to maintain the long-lived connection.

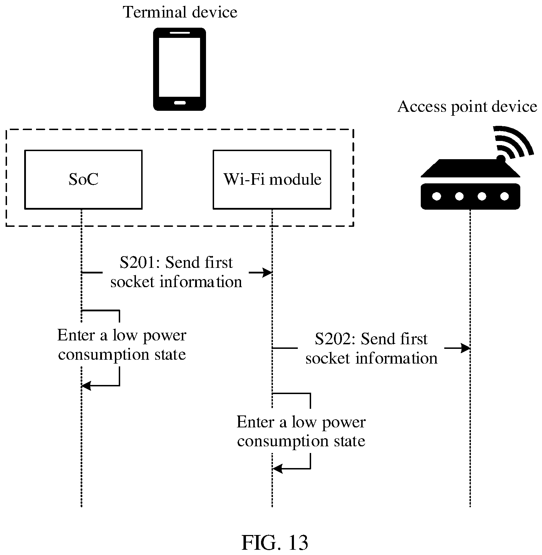

As shown in FIG. 13, the step S105 may be specifically implemented by using the following step S201 and step S202.

Step S201: The SoC of the terminal device sends the first socket information to the Wi-Fi module.

After sending the first socket information to the Wi-Fi module, the SoC may enter the low power consumption state to reduce power consumption.

Step S202: The Wi-Fi module sends the first socket information to the access point device.

After sending the first socket information to the access point device, the Wi-Fi module may enter the low power consumption state to reduce power consumption.

Step S106: After receiving the first socket information, the access point device keeps a heartbeat with the server by using the first socket information.

According to the long-lived connection method provided in this embodiment of this application, it is expected that after the terminal device enters the low power consumption state, the access point device acts as a proxy for the terminal device to keep a heartbeat with the server. In this way, the SoC and the Wi-Fi module of the terminal device do not need to be frequently woken up, which achieves an objective of reducing power consumption of the terminal device in the low power consumption state. It may be understood that, because the terminal device keeps a heartbeat with the server based on the socket information, to successfully establish a heartbeat with the server, the access point device needs to obtain the socket information in the TCP/IP protocol stack of the terminal device, namely, the first socket information.

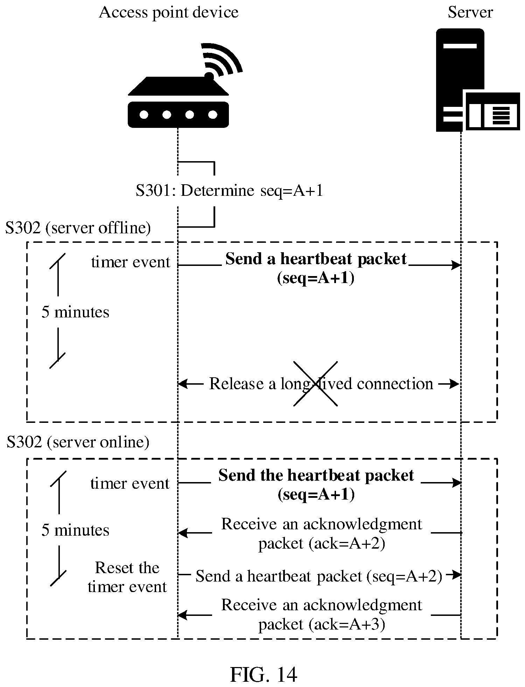

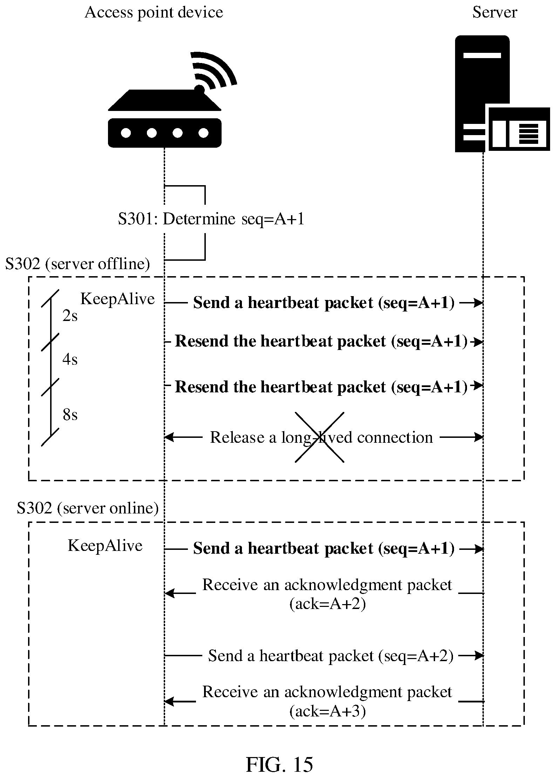

In specific implementation, the access point device may send a heartbeat packet to the server in a timer (timer) event, or may periodically send a heartbeat packet to the server by using the KeepAlive function of the TCP Based on the timer (timer) event or the KeepAlive function, as shown in FIG. 14 or FIG. 15, the step S106 may be implemented by using the following step S301 and step S302.

Step S301: The access point device determines a value of seq in a heartbeat packet based on seq information in first socket information.

In specific implementation, after receiving the first socket information, the access point device may add 1 to a value of seq in the first socket information to obtain a value of seq in a first heartbeat packet sent to the server, add 1 to the value of seq in the first heartbeat packet to obtain a value of seq in a second heartbeat packet, add 1 to the value of seq in the second heartbeat packet to obtain a value of seq in a third heartbeat packet, and so on.

For example, in the first socket information, seq=A. The access point device may determine seq=A+1 in the first heartbeat packet. For ease of description, a heartbeat packet (seq=A+1) is written herein. In the first heartbeat packet, seq=A+1. The access point device may determine seq=A+2 in the second heartbeat packet. For ease of description, a heartbeat packet (seq=A+2) is written herein. In the second heartbeat packet, seq=A+2. The access point device may determine seq=A+3 in the second heartbeat packet. For ease of description, a heartbeat packet (seq=A+3) is written herein. This rule also applies to other cases.

Step S302: The access point device sends a heartbeat packet to the server.

As shown in FIG. 14, after receiving the first socket information, the access point device may set a timer event. The timer event may start a countdown (for example, 5 minutes) when the access point device sends the first heartbeat packet (seq=A+1) to the server. In a countdown process, the access point device may continuously detect whether an acknowledgment packet (ack=A+2) sent by the server is received. If the access point device still does not receive the acknowledgment packet (ack=A+2) from the server when the countdown ends, the access point device may consider that the server is offline. In this case, the access point device may release the long-lived connection to the server. If the access point device receives the acknowledgment packet (ack=A+2) from the server in the countdown process, the access point device may determine that the server is online. Therefore, the access point device may continue to act as the proxy for the terminal device to maintain the long-lived connection to the server. Further, the access point device resets the timer event when the countdown ends, to continue to send a next heartbeat packet (seq=A+2) to the server, and detects whether an acknowledgment packet (ack=A+3) is received. A subsequent heartbeat process can be deduced by analogy.

As shown in FIG. 15, after receiving the first socket information, the access point device may enable the KeepAlive function of the TCP, to send the heartbeat packet (seq=A+1) to the server. If the server receives the heartbeat packet (seq=A+1), the server responds with the acknowledgment packet (ack=A+2) to the access point device, to notify the access point device of existence of the server. If the access point device does not receive the acknowledgment packet (ack=A+2) within a time period (for example, 2 seconds, 4 seconds, or 8 seconds), the access point device sends the heartbeat packet (seq=A+1) to the server again. After several retries, if the access point device still does not receive the acknowledgment packet (ack=A+2), the access point device may consider that the server is offline. In this case, the access point device may release the long-lived connection to the server. If the access point device receives the acknowledgment packet (ack=A+2), the access point device may determine that the server is online, and the access point device may continue to act as the proxy for the terminal device to maintain the long-lived connection to the server. In addition, the access point device sends a next heartbeat packet (seq=A+2) to the server after preset duration (for example, 5 minutes). A subsequent heartbeat process can be deduced by analogy.

It may be understood that, when the access point device acts as the proxy for the terminal device to keep a heartbeat with the server, as a heartbeat packet and an acknowledgment packet are received and sent, socket information (for example, seq and ack) of the long-lived connection changes constantly, and the socket information is maintained by the access point device instead of the terminal device. In this embodiment of this application, to distinguish socket information maintained by the access point device from socket information (for example, the first socket information) maintained by the terminal device, the socket information maintained by the access point device is referred to as second socket information.

In the step S104 to the step S106 of the long-lived connection method provided in this embodiment of this application, the access point device acts as the proxy for the terminal device to keep a heartbeat with the server. Therefore, the terminal device does not need to frequently wake up the SoC and the Wi-Fi module, which helps reduce power consumption of the terminal device. For example, a heartbeat period is 3.5 minutes for calculation. If the terminal device keeps a heartbeat with the server, the terminal device needs to send heartbeat packets at least 408 times in a day, that is, wake up the SoC and the Wi-Fi module 408 times. Based on a calculation that 0.2 mAH (mAH) of power is consumed each time the heartbeat packet is sent, power consumed by the terminal device for sending the heartbeat packets every day is at least 0.2 mAH x 408 = 87 mAH. It can be learned that if the long-lived connection method in this embodiment of this application is used, power consumed by the terminal device can be reduced by at least 87 mAH every day, so that a battery life of the terminal device is effectively prolonged.

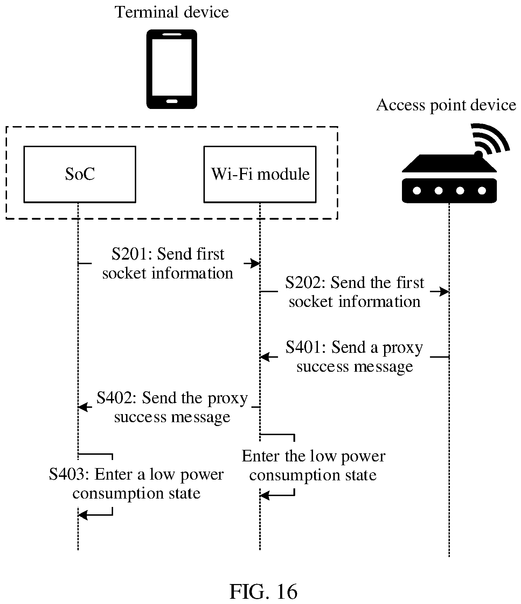

In an implementation, after successfully acting as the proxy for the terminal device to keep a heartbeat with the server, the access point device may further send a proxy success message to the terminal device, so that the terminal device enters a sleep state after receiving the proxy success message. As shown in FIG. 16, this process may include step S401 to step S403.

Step S401: After successfully acting as a proxy for the terminal device to keep a heartbeat with the server, the access point device sends the proxy success message to the Wi-Fi module of the terminal device.

In specific implementation, when the access point device receives the acknowledgment packet (ack=A+2) sent by the server for the first heartbeat packet (seq=A+1), it is considered that the access point device successfully acts as the proxy for the terminal device to keep a heartbeat with the server. In this case, the access point device may send the proxy success message to the Wi-Fi module via a Wi-Fi link.

Step S402: The Wi-Fi module sends the proxy success message to the SoC of the terminal device, and then enters the low power consumption state.

In specific implementation, after performing the step S202, that is, after sending the first socket information to the access point device, the Wi-Fi module first does not enter the sleep state, but waits for feedback from the access point device. If the Wi-Fi module receives the proxy success message sent by the access point device, the Wi-Fi module may first forward the proxy success message to the SoC, and then enter the low power consumption state.

Step S403: After receiving the proxy success message, the SoC enters the low power consumption state.

In specific implementation, after performing the step S201, that is, after sending the first socket information to the Wi-Fi module, the SoC first does not enter the sleep state, but waits for feedback from the Wi-Fi module. If the SoC receives the proxy success message forwarded by the Wi-Fi module, the SoC may enter the low power consumption state.

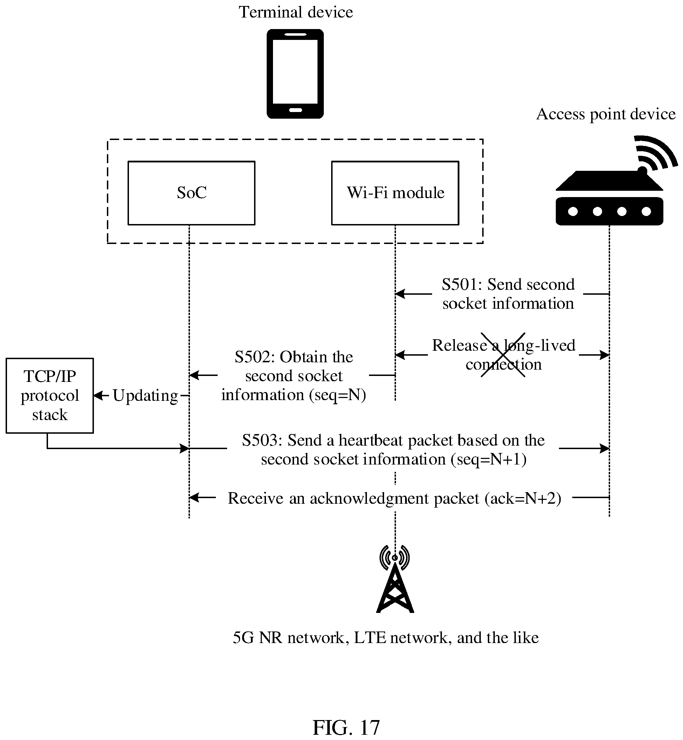

In an implementation, after successfully acting as the proxy for the terminal device to keep a heartbeat with the server, the access point device may further synchronize the second socket information maintained by the access point device to the terminal device, so that when the terminal device is disconnected from the access point device, the terminal device can withdraw the proxy and continue to send a heartbeat packet to the server based on the second socket information, to continue to maintain the long-lived connection. As shown in FIG. 17, this process may include step S501 to step S503.

Step S501: The access point device sends the second socket information to the Wi-Fi module of the terminal device.

For example, the access point device may place the second socket information in a beacon (beacon) frame, to periodically send the second socket information to the Wi-Fi module of the terminal device by using the beacon frame. According to IEEE 802.11 (institute of electrical and electronics engineers, IEEE), a beacon frame is a maintenance mechanism between devices. By periodically broadcasting the beacon frames, an access point device notifies a terminal device within its range of existence of the access point device. In this embodiment of this application, the access point device may send the beacon frame according to a period (for example, 100 ms) defined in IEEE 802.11, or may send the beacon frame according to a self-defined period.

For example, the access point device may place the second socket information in a null data (null data) frame, and periodically send the null data frame to the Wi-Fi module of the terminal device, to periodically send the second socket information to the Wi-Fi module of the terminal device. In IEEE 802.11, a null data frame is one of data frames (data frames), and may be usually used by an access point device to feed back null data, maintain a Wi-Fi link, or the like. In this embodiment of this application, the access point device may send the beacon frame to the Wi-Fi module of the terminal device according to a user-defined period (for example, 100 ms).

Step S502: When the terminal device is disconnected from the access point device, the SoC of the terminal device obtains the second socket information from the Wi-Fi module.

In specific implementation, after receiving the second socket information, the Wi-Fi module may buffer the second socket information into storage space of the Wi-Fi module. Each time the Wi-Fi module receives new socket information, the Wi-Fi module updates the new socket information into the storage space, so that the second socket information buffered by the Wi-Fi module can always be synchronized with the second socket information maintained by the access point device. When the terminal device is disconnected from the access point device, the Wi-Fi module may wake up the SoC. After being woken up, the SoC may extract the second socket information from the Wi-Fi module, and update the extracted second socket information to the TCP/IP protocol stack, to replace the first socket information previously stored in the TCP/IP protocol stack.

In this embodiment of this application, that the terminal device is disconnected from the access point device may include at least the following two cases.

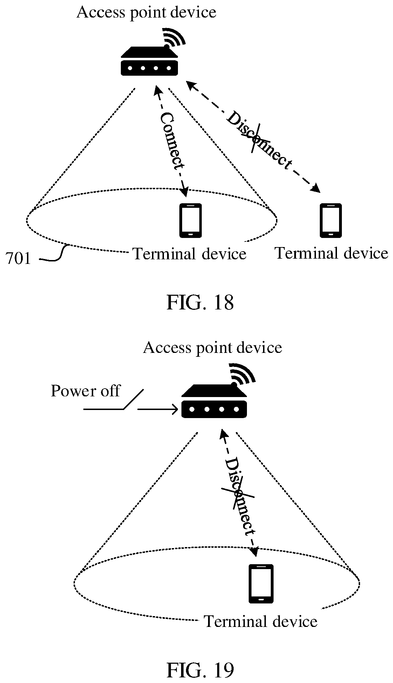

In a first case, as shown in FIG. 18, when the terminal device leaves a coverage area 701 of the access point device, the Wi-Fi module of the terminal device can no longer find the access point device. Therefore, the terminal device is disconnected from the access point device.

In a second case, as shown in FIG. 19, when the access point device is powered off, the Wi-Fi module of the terminal device can no longer find the access point device. Therefore, the terminal device is disconnected from the access point device.

Step S503: The SoC of the terminal device sends the heartbeat packet to the server based on the second socket information.

Currently, the terminal device may be usually connected to the Internet in at least one connection manner, for example, 5G NR, LTE, or a Wi-Fi local area network. Therefore, after the terminal device is disconnected from the access point device, if the terminal device can connect to the Internet in another manner, the SoC of the terminal device may send the heartbeat packet to the server in another manner.

For example, it is assumed that the terminal device is connected to both a SG NR network and the Wi-Fi local area network. After the terminal device is disconnected from the access point device, if the updated second socket information in the TCP/IP protocol stack includes seq=N, the terminal device may determine seq=N+1 for a next heartbeat packet. For ease of description, a heartbeat packet (seq=N+1) is written herein. Then, the terminal device may send the heartbeat packet (seq=N+1) to the server via the 5G NR network, to continue to maintain the long-lived connection to the server.

In an implementation, after the access point device successfully acts as the proxy for the terminal device to keep a heartbeat with the server, if the terminal device needs to send non-heartbeat data to the server, the terminal device may extract the second socket information from the Wi-Fi module, and send the non-heartbeat data to the server based on the second socket information.

For example, the non-heartbeat data is location information of the terminal device. After the access point device successfully acts as the proxy for the terminal device to keep a heartbeat with the server, if the terminal device needs to send the location information to the server, the terminal device may wake up the SoC. After being woken up, the SoC may extract the second socket information from the Wi-Fi module, and update the extracted second socket information to the TCP/IP protocol stack, to replace the first socket information previously stored in the TCP/IP protocol stack. Then, the SoC may send the location information to the server based on the second socket information. For example, the location information may be used by the server to provide a location-based service (location-based service, LBS) for the terminal device.

In addition, when the terminal device sends the non-heartbeat data to the server, the access point device may suspend sending a heartbeat packet to the server. After the terminal device finishes sending the non-heartbeat data to the server, the terminal device may re-execute the step S104 and the step S105 to send latest socket information in the TCP/IP protocol stack to the access point device, so that the access point device continues to act as the proxy for the terminal device to keep a heartbeat with the server, and the terminal device may continue to enter the low power consumption state, to reduce power consumption.

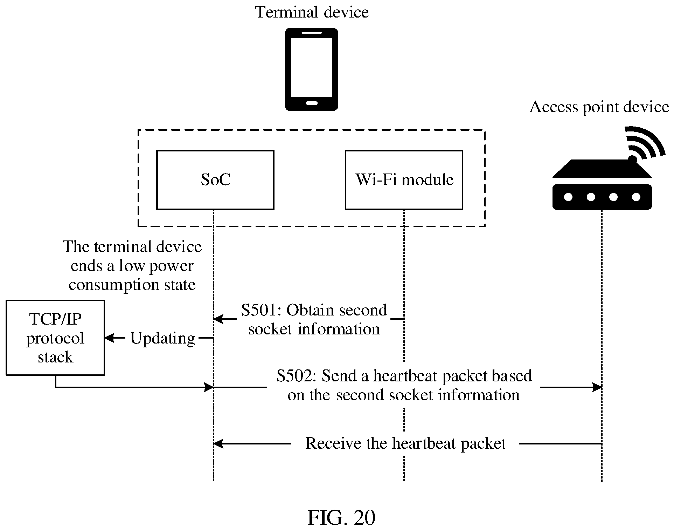

As shown in FIG. 20, a proxy ending phase of the long-lived connection method provided in this embodiment of this application may include steps S107 and S108.

Step S107: When the terminal device ends the low power consumption state, the SoC obtains the second socket information from the Wi-Fi module.

A behavior of ending the low power consumption state by the terminal device may occur in the following scenarios. For example, when the terminal device is unlocked, the low power consumption state may be ended. An unlocking manner of the terminal device may include unlocking with a lock screen password, face unlocking, fingerprint unlocking, iris unlocking, or the like. For another example, when the terminal device is charged, the low power consumption state may be ended.

In specific implementation, when the terminal device ends the low power consumption state, the SoC of the terminal device may extract the second socket information from the Wi-Fi module, and update the extracted second socket information to the TCP/IP protocol stack, to replace the first socket information previously stored in the TCP/IP protocol stack.

In addition, when the terminal device ends the low power consumption state, the terminal device may notify the access point device of a message of ending the low power consumption state. After learning that the terminal device ends the low power consumption state, the access point device may stop acting as the proxy for the terminal device to send the heartbeat packet to the server, and stop sending the second socket information to the Wi-Fi module of the terminal device.

Step S108: The SoC sends the heartbeat packet to the server based on the second socket information.

In specific implementation, the terminal device may send the heartbeat packet to the access point device via the Wi-Fi link, and the access point device forwards the heartbeat packet to the server based on a routing table. It can be learned that, after the terminal device ends the low power consumption state, the access point device restores a normal data forwarding function, and subsequent data exchange between the terminal device and the access point device is implemented through forwarding by the access point device.

It can be learned from the foregoing technical solutions that, according to the long-lived connection method provided in this embodiment of this application, when the terminal device is in the low power consumption state, the access point device can act as the proxy for the terminal device to keep a heartbeat with the server, so that the terminal device does not need to frequently wake up the SoC and the Wi-Fi module to send heartbeat packets in the low power consumption state. Therefore, power consumption of the terminal device is reduced, and a battery life of the terminal device is prolonged.

The following further describes the technical solutions in this embodiment of this application with reference to some specific scenarios.

In an embodiment, when a terminal device 101 accesses a Wi-Fi network of a routing device 202, the routing device 202 may act as a proxy for the terminal device 101 to send a heartbeat packet to the server after the terminal device 101 is screen-locked.

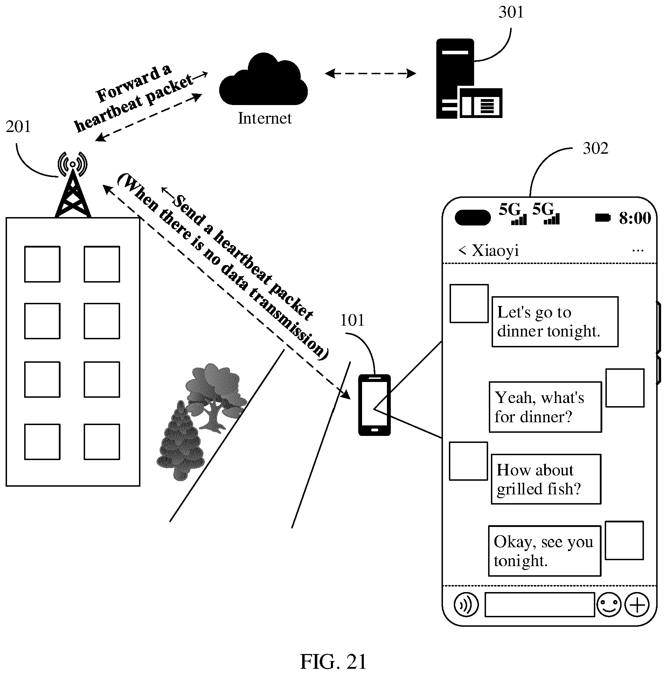

As shown in FIG. 21, when the user is located outdoors, the terminal device 101 may not find a known Wi-Fi network, for example, cannot find the Wi-Fi network of the routing device 202 at home or in a company. In this case, if the terminal device 101 enables a data network, the terminal device 101 is connected to a base station 201 of a nearby mobile operator, and accesses the Internet via the base station 201 of the operator. Generally, one or more applications APPs are installed on the terminal device 101. Some of these APPs are pre-installed on the terminal device 101, and some of these APPs are downloaded and installed by the user from an application store of the terminal device 101. When the terminal device 101 receives an operation of starting an APP by the user, for example, starting a social software client 302, the terminal device 101 establishes a connection to a social software server 301, and a packet transmitted between the terminal device 101 and the social software server 301 is forwarded via the base station 201. When the social software client 302 is run in a system foreground of the terminal device 101, the user may perform operations such as tapping and swiping on a user interface of the social software client 302, to browse a friend list, open a chat interface, enter and send chat content, view moments, and the like. In this case, data is transmitted between the terminal device 101 and the social software server 301.

After the user finishes chatting with a friend by using the social software client 302, if the user does not perform other operations on the terminal device 101, the user may press a lock screen button on the terminal device 101. When the terminal device 101 receives an operation of pressing the lock screen button by the user, the terminal device is screen-locked (as shown in FIG. 6A and FIG. 6B). To perform other operations on the terminal device 101, the user may switch the social software client 302 to a system background. When the terminal device 101 is in a screen-locked state or the social software client 302 is located in the system background, if no friend sends a chat message to the user, and the social software server 301 has no other message that needs to be pushed to the social software client 302, data is no longer transmitted between the social software client 302 and the social software server 301.

Generally, in a state in which the terminal device 101 establishes a long-lived connection to the social software server 301, a TCP/IP protocol stack of the terminal device 101 maintains first socket information of the long-lived connection. When no data is transmitted between the terminal device 101 and the social software server 301, the terminal device 101 may periodically send a heartbeat packet to the social software server 301 based on the first socket information, to notify the social software server 301 of existence of the terminal device 101. In a scenario shown in FIG. 21, a heartbeat packet of the terminal device 101 is sent to the social software server 301 via the base station 201, and the base station 201 plays a role in forwarding a heartbeat packet.

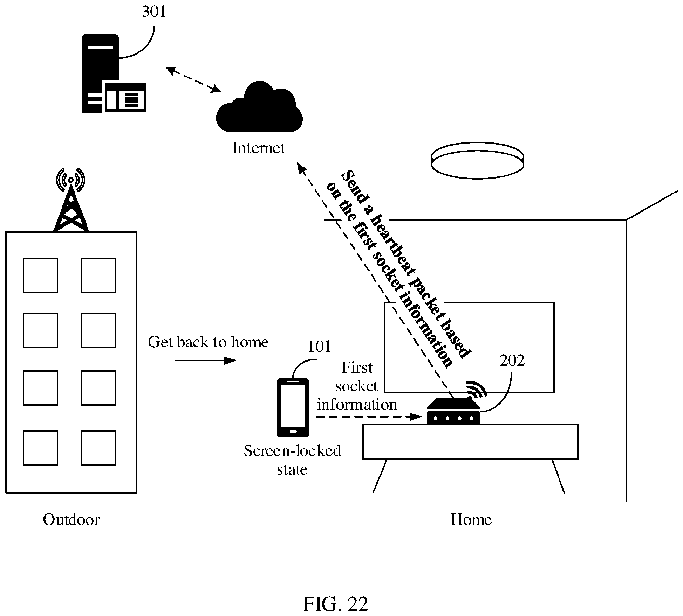

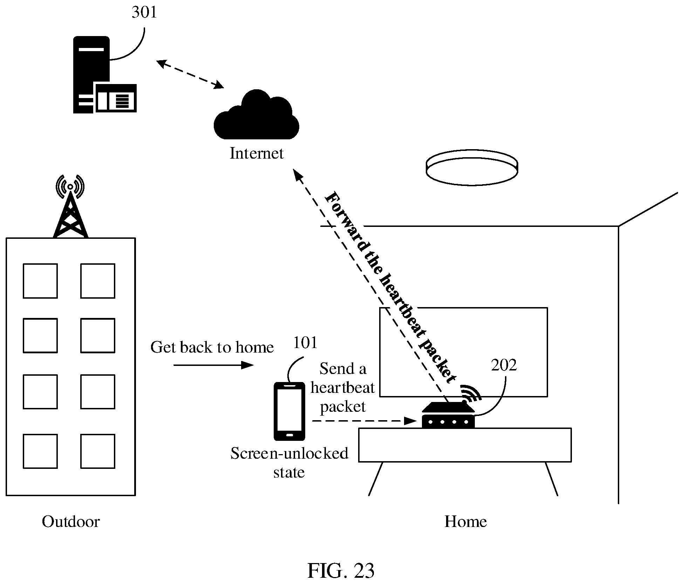

Further, as shown in FIG. 22 and FIG. 23, when the user gets back indoors (for example, at home or in an office), the terminal device 101 may find a known Wi-Fi network. In this case, the terminal device 101 is connected to a corresponding routing device 202, and accesses the Internet by using the routing device 202. A packet transmitted between the terminal device 101 and the social software server 301 is forwarded by the routing device 202. It may be understood that when the terminal device 101 establishes a connection to the routing device 202, the terminal device 101 may be in a screen-locked state (as shown in FIG. 22), or may be in a screen-unlocked state (as shown in FIG. 23).

If the terminal device 101 is in the screen-locked state when establishing the connection to the routing device 202, as shown in FIG. 22, the terminal device 101 may send the first socket information to the routing device 202. After receiving the first socket information, the routing device 202 acts as the proxy for the terminal device 101 to send the heartbeat packet to the social software server 301 based on the first socket information. In this way, the terminal device 101 does not need to be periodically woke up in the screen-locked state to send the heartbeat packet to the social software server 301.

For example, the user chats with a friend by using the social software client 302 on a way back to home. When the user almost gets home, the user ends a chat, the terminal device 101 is screen-locked, and the terminal device 101 enters a low power consumption state after the screen is locked. After the user gets back indoors, the terminal device 101 establishes, in the screen-locked state, the connection to the routing device 202 at the user's home. After the terminal device 101 successfully establishes the connection to the routing device 202, the terminal device 101 sends the first socket information of the long-lived connection to the routing device 202, and then continues to maintain the low power consumption state. After receiving the first socket information, the routing device 202 acts as the proxy for the terminal device 101 to send the heartbeat packet to the social software server 301 based on the first socket information, to maintain the long-lived connection.

If the terminal device 101 is in the screen-unlocked state when establishing the connection to the routing device 202, as shown in FIG. 23, after establishing the connection to the routing device 202, the terminal device 101 does not immediately send the first socket information to the routing device 202, but sends the first socket information to the routing device 202 after the terminal device 101 is screen-locked.

For example, the user chats with a friend by using the social software client 302 on a way to home. When the user almost gets home, the user ends a chat, switches the social software client 302 to the system background, and continues to use the terminal device 101. The terminal device 101 remains in the screen-unlocked state. After the user gets back indoors, the terminal device 101 establishes, in the screen-unlocked state, the connection to the routing device 202 at the user's home. After the terminal device 101 successfully establishes the connection to the routing device 202, because the terminal device 101 is in the screen-unlocked state, the terminal device 101 does not immediately send the first socket information to the routing device 202, but continues to personally send the heartbeat packet to the social software server 301. In this case, the routing device 202 plays a role in forwarding a heartbeat packet. After that, if the terminal device 101 is screen-locked, a scenario in FIG. 22 is met. In this case, the terminal device 101 first sends the first socket information to the routing device 202, and then enters the low power consumption state. After receiving the first socket information, the routing device 202 acts as the proxy for the terminal device 101 to send the heartbeat packet to the social software server 301 based on the first socket information. In this way, the terminal device 101 does not need to be periodically woke up in the screen-locked state to send the heartbeat packet to the social software server 301, so that power consumption is reduced.

When the routing device 202 acts as the proxy for the terminal device 101 to send the heartbeat packet to the social software server 301, the routing device 202 may communicate with the Wi-Fi module of the terminal device 101 in a beacon frame and a null data frame. For example, the routing device 202 may periodically send, to the Wi-Fi module of the terminal device 101 in a beacon frame and a null data frame, the second socket information maintained by the routing device 202 when acting as the proxy for the terminal device 101 to send the heartbeat packet, so that the second socket information is backed up and stored in the Wi-Fi module. In this way, if the terminal device 101 is disconnected from the routing device 202 in a screen-locked period, the terminal device 101 may withdraw a function of sending a heartbeat packet by the routing device 202. Specifically, the terminal device 101 obtains the second socket information from the Wi-Fi module, and sends the heartbeat packet to the social software server 301 based on the second socket information, to continue to maintain the long-lived connection.

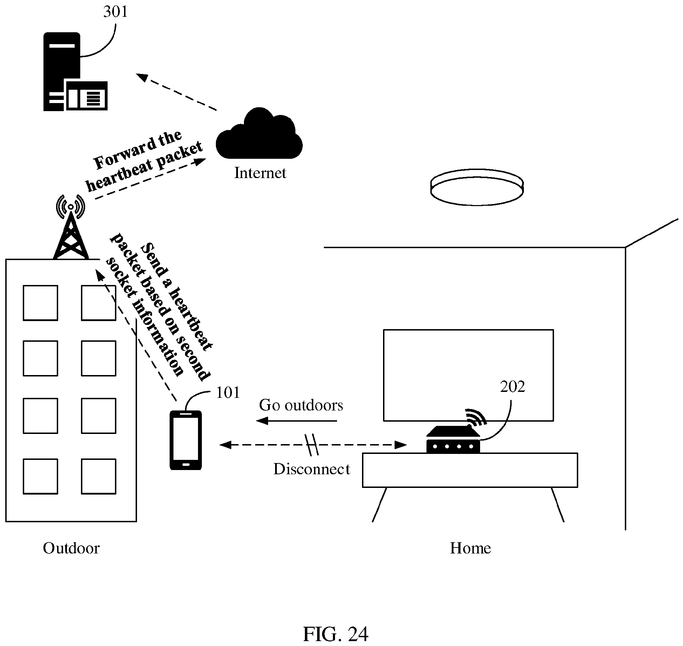

For example, as shown in FIG. 24, when the terminal device 101 is screen-locked, if the user goes outdoors and the terminal device is not within a signal coverage of the routing device 202, the terminal device 101 is disconnected from the router. In this case, the terminal device 101 may obtain, from the Wi-Fi module, the second socket information backed up by the terminal device 101, and store the second socket information in the TCP/IP protocol stack of the terminal device 101. After being disconnected from the router, the terminal device 101 establishes a data connection to the base station 201. Therefore, the terminal device 101 may send the heartbeat packet to the social software server 301 based on the second socket information via the base station 201, to continue to maintain the long-lived connection between the terminal device 101 and the social software server 301. In this case, the base station 201 plays a role in forwarding a heartbeat packet.

In addition, after the terminal device 101 is screen-locked, if the terminal device 101 receives an unlock operation of the user, the terminal device is screen-unlocked, and a function of sending a heartbeat packet by the routing device 202 may be withdrawn. For example, if the user gets back to home and continues to chat with a friend by using the social software client 302, the user unlocks a mobile phone in a manner such as fingerprint unlocking, password unlocking, face unlocking, or gesture unlocking. After being unlocked, the terminal device 101 may obtain the second socket information backed up by the terminal device 101 from the Wi-Fi module, and store the second socket information in the TCP/IP protocol stack of the terminal device 101. In this way, the terminal device 101 may send the heartbeat packet to the social software server 301 based on the second socket information, to continue to maintain the long-lived connection. In this case, the routing device 202 plays a role in forwarding a heartbeat packet.

In another embodiment, when the terminal device 101 accesses a Wi-Fi network of the routing device 202, the routing device 202 may act as the proxy for the terminal device 101 to send the heartbeat packet to the server when power of the terminal device 101 is insufficient.

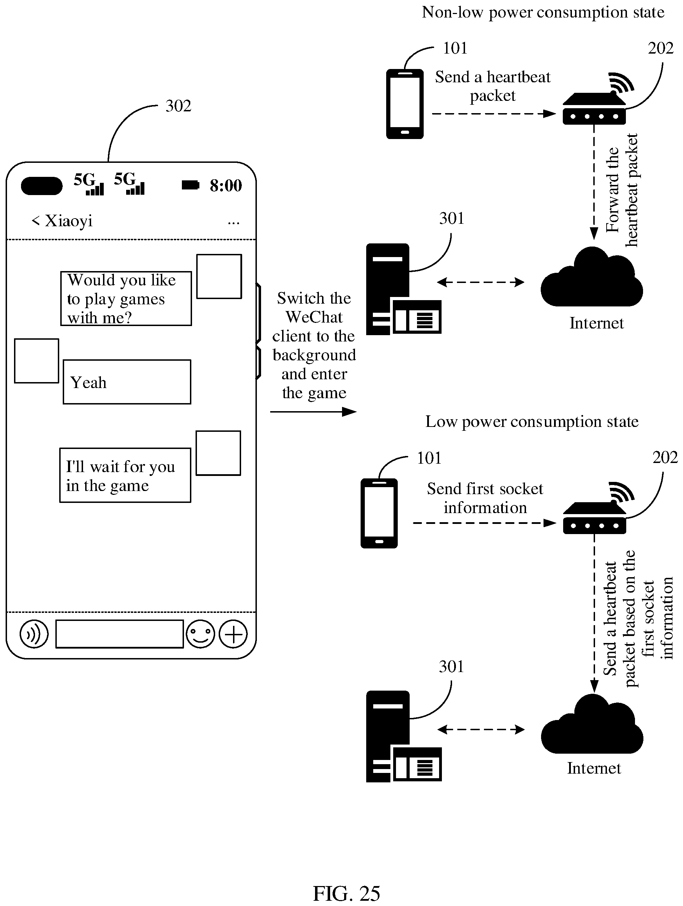

As shown in FIG. 25, the user starts the social software client 302 and sends a message to a friend to invite the friend to play games together. After the friend replies with a message indicating that the friend agrees to play games together, the user switches the social software client 302 to the system background for running, and then starts a game client. Afterwards, if no friend sends a chat message to the user, and the social software server 301 has no other message that needs to be pushed to the social software client 302, no data is transmitted between the social software client 302 and the social software server 301. Therefore, the terminal device 101 needs to send the heartbeat packet to the social software server 301 to maintain the long-lived connection to the social software server 301. When power of the terminal device 101 is higher than a threshold, for example, higher than 20%, the terminal device 101 is in a non-low power consumption state, and the terminal device 101 personally sends a heartbeat packet. In this case, the routing device 202 only plays a role in forwarding a heartbeat packet. When power of the terminal device 101 is lower than a threshold, for example, lower than 20%, the terminal device 101 may enter the low power consumption state, and the terminal device 101 sends the first socket information of the long-lived connection to the routing device 202. After receiving the first socket information, the routing device 202 acts the proxy for the terminal device 101 to send the heartbeat packet to the social software server 301 based on the first socket information. In this way, the terminal device 101 does not need to periodically send the heartbeat packet to the social software server 301 in the screen-locked state, so that power consumption is reduced.

When the routing device 202 acts as the proxy for the terminal device 101 to send the heartbeat packet to the server, the routing device 202 may periodically send, to the Wi-Fi module of the terminal device 101 in a beacon frame and a null data frame, the second socket information maintained by the routing device 202 when acting as the proxy for the terminal device 101 to send the heartbeat packet to the server, so that the second socket information is backed up and stored in the Wi-Fi module.

Next, when the user finds in a process of playing games that the power of the terminal device 101 is insufficient, the user may connect a data line to the terminal device 101 to charge the terminal device 101. When charging is detected, the terminal device 101 may end the low power consumption state. Then, the terminal device 101 obtains, from the Wi-Fi module, the second socket information backed up by the terminal device 101, and stores the second socket information into the TCP/IP protocol stack of the terminal device 101. In this way, the terminal device 101 may send the heartbeat packet to the social software server 301 by using the routing device 202 based on the second socket information, to continue to maintain the long-lived connection between the terminal device 101 and the social software server 301. In this case, the routing device 202 no longer acts as the proxy for the terminal device 101 to send a packet to the social software server 301; instead, it forwards heartbeat packets.

In addition, when the user plays games, if the terminal device 101 is disconnected from the routing device 202 (for example, the terminal device 101 is powered off or the user goes outdoors), the terminal device 101 also obtains, from the Wi-Fi module, the second socket information backed up by the terminal device 101, and stores the second socket information in the TCP/IP protocol stack of the terminal device 101. In this way, the terminal device 101 may send the heartbeat packet to the social software server 301 based on the second socket information via the base station 201 accessed by the terminal device 101, to continue to maintain the long-lived connection between the terminal device 101 and the social software server 301.

In the foregoing embodiments provided in this application, the solutions of the long-lived connection method provided in this application are separately described from perspectives of a device or an apparatus and interaction between devices or apparatuses. It may be understood that, to implement the foregoing functions, each device or apparatus, for example, the terminal device and the access point device, includes a corresponding hardware structure and/or software module for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

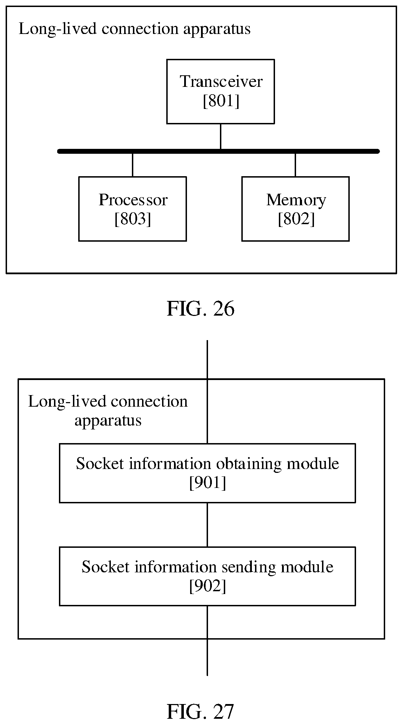

FIG. 26 is a schematic diagram of a structure of a long-lived connection apparatus according to an embodiment of this application. In an embodiment, a terminal device may implement a corresponding function by using a hardware apparatus shown in FIG. 26. As shown in FIG. 26, the long-lived connection apparatus may include a transceiver 801, a memory 802, and a processor 803.

In an embodiment, the processor 803 may include one or more processing units. For example, the processor 803 may include an application processor, a modem processor, a graphics processing unit, an image signal processor, a controller, a video codec, a digital signal processor, a baseband processor, and/or a neural network processing unit. Different processing units may be independent components, or may be integrated into one or more processors. The memory 802 is coupled to the processor 803, and is configured to store various software programs and/or a plurality of groups of instructions. In some embodiments, the memory 802 may include a volatile memory and/or a non-volatile memory. The transceiver 801 may include, for example, a radio frequency circuit, a mobile communication module, and a wireless communication module, and is configured to implement a wireless communication function of the terminal device.

When the software program and/or the plurality of groups of instructions in the memory 802 are/is run by the processor 803, the terminal device is enabled to perform the following method steps: in a screen-unlocked state, sending, based on first socket information, a heartbeat packet to a server associated with a first APP, where the heartbeat packet is forwarded to the server by using a first access point device, the heartbeat packet is used to maintain a long-lived connection between the terminal device and the server, and the first socket information is data required for maintaining the long-lived connection between the terminal device and the server; and sending the first socket information to the first access point device when switching from the screen-unlocked state to a screen-locked state, so that the first access point device acts as a proxy for the terminal device to send the heartbeat packet to the server based on the first socket information.

In an embodiment, the software program and/or the plurality of groups of instructions in the memory 802 further enable the terminal device to perform the following method steps: receiving, by using a Wi-Fi module, second socket information sent by the access point device, and storing the second socket information in the Wi-Fi module. The second socket information is data that is generated by the first access point device when acting as the proxy for the terminal device to send the heartbeat packet to the server and that is used to maintain the long-lived connection.

In an embodiment, the software program and/or the plurality of groups of instructions in the memory 802 further enable the terminal device to perform the following method steps: when being disconnected from the first access point device in the screen-locked state, connecting to a second access point device, and sending a heartbeat packet to the server based on the second socket information. The heartbeat packet is forwarded to the server by using the second access point device.

In an embodiment, the software program and/or the plurality of groups of instructions in the memory 802 further enable the terminal device to perform the following method step: when switching from the screen-locked state to the screen-unlocked state, sending a heartbeat packet to the server based on the second socket information. The heartbeat packet is forwarded to the server by using the first access point device.

In an embodiment, the software program and/or the plurality of groups of instructions in the memory 802 further enable the terminal device to perform the following method step: when entering a low power consumption state in the screen-unlocked state, sending the first socket information to the first access point device, so that the first access point device acts as the proxy for the terminal device to send the heartbeat packet to the server based on the first socket information.

In an embodiment, the software program and/or the plurality of groups of instructions in the memory 802 further enable the terminal device to perform the following method step: when ending the low power consumption state in the screen-unlocked state, sending a heartbeat packet to the server based on the second socket information. The heartbeat packet is forwarded to the server by using the first access point device.

According to the foregoing apparatus, when the terminal device is in the low power consumption state, the access point device can act as the proxy for the terminal device to keep a heartbeat with the server, so that the terminal device does not need to frequently wake up a SoC and the Wi-Fi module to send heartbeat packets in the low power consumption state. Therefore, power consumption of the terminal device is reduced and a battery life of the terminal device is prolonged.

In an embodiment, the access point device may implement a corresponding function by using the hardware apparatus shown in FIG. 26.

In an embodiment, the processor 803 may include one or more processing units, for example, a central processing unit, a micro controller unit, and a storage controller. Different processing units may be independent components, or may be integrated into one or more processors, for example, integrated into a system on a chip (system on a chip, SoC). The memory 802 is coupled to the processor 803, and is configured to store various software programs and/or a plurality of groups of instructions. The memory 802 may include one or more storage units, for example, may include a volatile memory and/or a non-volatile memory. Different storage units may be independent components, or may be integrated or packaged into one or more processors as a part of the processor. The transceiver 801 may include, for example, a radio frequency circuit, an antenna, and a baseband circuit. The transceiver may be an independent component, or may be partially or completely integrated or packaged into the processor as a part of the processor.

When the software program and/or the plurality of groups of instructions in the memory 802 are/is run by the processor 803, an access point device is enabled to perform the following method steps: receiving first socket information sent by the terminal device, where the first socket information is sent by the terminal device when switching from a screen-unlocked state to a screen-locked state, and the first socket information is data required for maintaining a long-lived connection between the terminal device and a server; and acting as a proxy for the terminal device to send a heartbeat packet to a server based on the first socket information. The heartbeat packet is used to maintain the long-lived connection between the terminal device and the server.

In an embodiment, the software program and/or the plurality of groups of instructions in the memory 802 further enable the access point device to perform the following method step: sending second socket information to the terminal device when acting as the proxy for the terminal device to send the heartbeat packet to the server. The second socket information is data that is generated by the first access point device when acting as the proxy for the terminal device to send the heartbeat packet to the server and that is used to maintain the long-lived connection.

In an embodiment, the software program and/or the plurality of groups of instructions in the memory 802 further enable the access point device to perform the following method step: periodically sending a beacon (beacon) frame and/or a null data (null data) frame to the terminal device when acting as the proxy for the terminal device to send the heartbeat packet to the server. The beacon frame and/or the null data frame include/includes second socket information.

In an embodiment, the software program and/or the plurality of groups of instructions in the memory 802 further enable the access point device to perform the following method step: after receiving the heartbeat packet from the terminal device, stopping acting as the proxy for the terminal device to send the heartbeat packet to the server.

According to the foregoing apparatus, when the terminal device is in the low power consumption state, the access point device can act as the proxy for the terminal device to keep a heartbeat with the server, so that the terminal device does not need to frequently wake up a SoC and the Wi-Fi module to send heartbeat packets in the low power consumption state. Therefore, power consumption of the terminal device is reduced and a battery life of the terminal device is prolonged.

In another embodiment, a terminal device may implement a corresponding function by using a software module shown in FIG. 27. As shown in FIG. 27, a long-lived connection apparatus configured to implement a function of the terminal device may include: a socket information obtaining module 901, configured to obtain first socket (socket) information of a long-lived connection from a TCP/IP protocol stack of the long-lived connection apparatus; and a socket information sending module 902, configured to send first socket information to an access point device, so that the access point device sends a heartbeat packet to a server based on the first socket information, to maintain the long-lived connection.

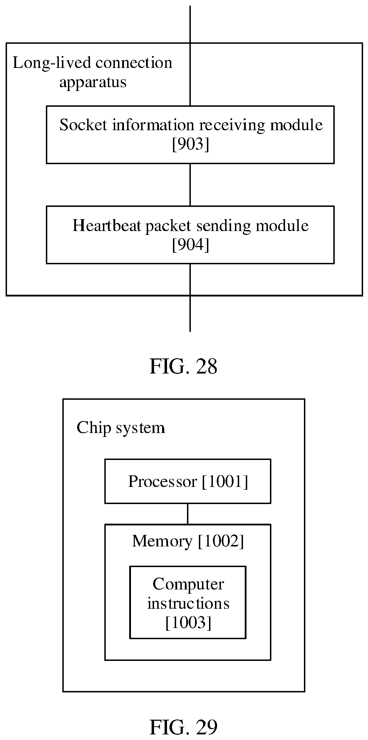

In another embodiment, an access point device may implement a corresponding function by using a software module shown in FIG. 28. As shown in FIG. 28, a long-lived connection apparatus configured to implement a function of the access point device may include: a socket information receiving module 903, configured to receive first socket information sent by a terminal device, where the first socket information is obtained by the terminal device from a TCP/IP protocol stack of the terminal device in a case in which the terminal device establishes a long-lived connection to a server; and a heartbeat packet sending module 904, configured to send a heartbeat packet to the server based on the first socket information.

An embodiment of this application further provides a network system. As shown in FIG. 1, the network system includes a terminal device 100, an access point device 200, and a server 300. The terminal device 100 establishes a long-lived connection to the server 300 by using the access point device 200. The terminal device 100 is configured to obtain first socket (socket) information of the long-lived connection from a TCP/IP protocol stack of the terminal device 100. The terminal device 100 is further configured to send the first socket information to the access point device 200. The access point device 200 is configured to send a heartbeat packet to the server 300 based on the first socket information.

An embodiment of this application further provides a computer-readable storage medium. The computer-readable storage medium stores instructions. When the instructions are run on a computer, the computer is enabled to perform the method according to the foregoing aspects.

An embodiment of this application further provides a computer program product including instructions. When the computer program product runs on a computer, the computer is enabled to perform the method according to the foregoing aspects.

An embodiment of this application further provides a chip system. FIG. 29 is a schematic diagram of a structure of the chip system. The chip system includes a processor 1001, configured to support the foregoing apparatus in implementing functions in the foregoing aspects, for example, generating or processing information in the foregoing method. In a possible design, the chip system further includes a memory 1002, configured to store computer instructions 1003 and data that are necessary for the long-lived connection apparatus. The chip system may include a chip, or may include a chip and another discrete component.

In the foregoing specific implementations, the objectives, technical solutions, and advantageous effects of embodiments of this application are further described in detail. It should be understood that the foregoing descriptions are merely specific implementations of embodiments of this application, but are not intended to limit the protection scope of embodiments of this application. Any modification, equivalent replacement, improvement, or the like made based on the technical solutions in embodiments of this application shall fall within the protection scope of embodiments of this application.

## Claims

1. A network system, comprising a terminal device and an access point device, wherein
a first application APP is installed on the terminal device; and
the terminal device is configured to:
in a screen-unlocked state, send, based on first socket information, a heartbeat packet to a server associated with the first APP, wherein the heartbeat packet is forwarded to the server by using a first access point device, the heartbeat packet is used to maintain a long-lived connection between the terminal device and the server, and the first socket information is data required for maintaining the long-lived connection between the terminal device and the server;
the terminal device is further configured to send the first socket information to the first access point device when switching from the screen-unlocked state to a screen-locked state; and
the first access point device is configured to:
after receiving the first socket information, act as a proxy for the terminal device to send the heartbeat packet to the server based on the first socket information.

2. The network system according to claim 1, wherein
the first access point device is further configured to send second socket information to the terminal device when acting as the proxy for the terminal device to send the heartbeat packet to the server, wherein the second socket information is data that is generated by the first access point device when acting as the proxy for the terminal device to send the heartbeat packet to the server and that is used to maintain the long-lived connection.

3. The network system according to claim 2, wherein
the terminal device is specifically configured to: receive the second socket information by using a Wi-Fi module, and store the second socket information in the Wi-Fi module.

4. The network system according to claim 2 or 3, wherein
the terminal device is further configured to: when being disconnected from the first access point device in the screen-locked state, connect to a second access point device, and send a heartbeat packet to the server based on the second socket information, wherein the heartbeat packet is forwarded to the server by using the second access point device.

5. The network system according to claim 2 or 3, wherein
the terminal device is further configured to: when switching from the screen-locked state to the screen-unlocked state, send a heartbeat packet to the server based on the second socket information, wherein the heartbeat packet is forwarded to the server by using the first access point device.

6. The network system according to claim 2 or 3, wherein
the terminal device is further configured to: when entering a low power consumption state in the screen-unlocked state, send the first socket information to the first access point device; and
the first access point device is further configured to: after receiving the first socket information, act as the proxy for the terminal device to send the heartbeat packet to the server based on the first socket information.

7. The network system according to claim 6, wherein
the terminal device is further configured to: when ending the low power consumption state in the screen-unlocked state, send a heartbeat packet to the server based on the second socket information, wherein the heartbeat packet is forwarded to the server by using the first access point device.

8. The network system according to claim 3, wherein
the first access point device is specifically configured to periodically send a beacon (beacon) frame and/or a null data (null data) frame to the terminal device when acting as the proxy for the terminal device to send the heartbeat packet to the server, wherein the beacon frame and/or the null data frame comprise/comprises the second socket information.

9. The network system according to any one of claims 1 to 8, wherein
the first access point device is further configured to: after receiving the heartbeat packet from the terminal device, stop acting as the proxy for the terminal device to send the heartbeat packet to the server.

10. A long-lived connection apparatus, applied to a terminal device, wherein a first APP is installed on the terminal device, the apparatus comprises a transceiver, a memory, and a processor, the memory comprises program instructions, and when the program instructions are run by the processor, the terminal device is enabled to perform the following method steps:
in a screen-unlocked state, sending, based on first socket information, a heartbeat packet to a server associated with the first APP, wherein the heartbeat packet is forwarded to the server by using a first access point device, the heartbeat packet is used to maintain a long-lived connection between the terminal device and the server, and the first socket information is data required for maintaining the long-lived connection between the terminal device and the server; and
sending the first socket information to the first access point device when switching from the screen-unlocked state to a screen-locked state, so that the first access point device acts as a proxy for the terminal device to send the heartbeat packet to the server based on the first socket information.

11. The long-lived connection apparatus according to claim 10, wherein the program instructions further enable the terminal device to perform the following method steps:
receiving, by using a Wi-Fi module, second socket information sent by the access point device, and storing the second socket information in the Wi-Fi module, wherein the second socket information is data that is generated by the first access point device when acting as the proxy for the terminal device to send the heartbeat packet to the server and that is used to maintain the long-lived connection.

12. The long-lived connection apparatus according to claim 11, wherein the program instructions further enable the terminal device to perform the following method steps:
when being disconnected from the first access point device in the screen-locked state, connecting to a second access point device, and sending a heartbeat packet to the server based on the second socket information, wherein the heartbeat packet is forwarded to the server by using the second access point device.

13. The long-lived connection apparatus according to claim 11, wherein the program instructions further enable the terminal device to perform the following method step:
when switching from the screen-locked state to the screen-unlocked state, sending a heartbeat packet to the server based on the second socket information, wherein the heartbeat packet is forwarded to the server by using the first access point device.

14. The long-lived connection apparatus according to claim 11, wherein the program instructions further enable the terminal device to perform the following method step:
when entering a low power consumption state in the screen-unlocked state, sending the first socket information to the first access point device, so that the first access point device acts as the proxy for the terminal device to send the heartbeat packet to the server based on the first socket information.

15. The long-lived connection apparatus according to claim 14, wherein the program instructions further enable the terminal device to perform the following method step:
when ending the low power consumption state in the screen-unlocked state, sending a heartbeat packet to the server based on the second socket information, wherein the heartbeat packet is forwarded to the server by using the first access point device.

16. A long-lived connection apparatus, applied to a first access point device, wherein the apparatus comprises a transceiver, a memory, and a processor, the memory comprises program instructions, and when the program instructions are run by the processor, the first access point device is enabled to perform the following method steps:
receiving first socket information sent by a terminal device, wherein the first socket information is sent by the terminal device when switching from a screen-unlocked state to a screen-locked state, and the first socket information is data required for maintaining a long-lived connection between the terminal device and a server; and
acting as a proxy for the terminal device to send a heartbeat packet to the server based on the first socket information, wherein the heartbeat packet is used to maintain the long-lived connection between the terminal device and the server.

17. The long-lived connection apparatus according to claim 16, wherein the program instructions further enable the first access point device to perform the following method step:
sending second socket information to the terminal device when acting as the proxy for the terminal device to send the heartbeat packet to the server, wherein the second socket information is data that is generated by the first access point device when acting as the proxy for the terminal device to send the heartbeat packet to the server and that is used to maintain the long-lived connection.

18. The long-lived connection apparatus according to claim 16, wherein the program instructions further enable the first access point device to perform the following method step:
periodically sending a beacon (beacon) frame and/or a null data (null data) frame to the terminal device when acting as the proxy for the terminal device to send the heartbeat packet to the server, wherein the beacon frame and/or the null data frame comprise/comprises the second socket information.

19. The long-lived connection apparatus according to any one of claims 16 to 18, wherein the program instructions further enable the first access point device to perform the following method step:
after receiving the heartbeat packet from the terminal device, stopping acting as the proxy for the terminal device to send the heartbeat packet to the server.

20. A computer-readable storage medium, wherein the computer-readable storage medium stores instructions, and when the instructions are run on a computer, the computer is enabled to perform the method steps performed by the terminal device according to any one of claims 10 to 15.

21. A computer-readable storage medium, wherein the computer-readable storage medium stores instructions, and when the instructions are run on a computer, the computer is enabled to perform the method steps performed by the first access point device according to any one of claims 16 to 19.

22. A computer program product, wherein when the computer program product runs on a computer, the computer is enabled to perform the method performed by the terminal device in the network system according to any one of claims 1 to 8.

23. A computer program product, wherein when the computer program product runs on a computer, the computer is enabled to perform the method performed by the access point device in the network system according to any one of claims 1 to 8.
